# EUROPÄISCHE PATENTANMELDUNG

(11) **EP 4 429 219 A1**
(43) Veröffentlichungstag der Anmeldung: **11.09.2024**
(21) Anmeldenummer: 24161495.7
(22) Anmeldetag: 05.03.2024
(51) Int. Cl.: H04M 3/51

(54) **VERFAHREN UND SYSTEM BARRERIEFREIER LÄNDERÜBERGREIFENDER NOTRUF**

(30) Priorität: 05.03.2023 DE 102023000820
(71) Anmelder: Eckert, Manuel, 14772 Brandenburg/Havel (DE)
(72) Erfinder: Eckert, Manuel, 14772 Brandenburg/Havel (DE); Naumann, Michael, 14776 Brandenburg/Havel (DE)
(74) Vertreter: Hertin und Partner Rechts- und Patentanwälte PartG mbB

(57) **Zusammenfassung**

Die Erfindung betrifft ein Verfahren und System einer barrierefreien Notrufkommunikation mit Leitstellen und des ärztlichen Bereitschaftsdienstes und weiterer Third Party Service (TPS) Angebote. Diese kann per Video-, Sprach-, Chat- und/oder Datenkommunikation erfolgen, wobei die Notrufe mit und/oder ohne Unterstützungsleistungen ausgelöst werden können.

## Beschreibung

Die Erfindung betrifft ein Verfahren und System einer barrierefreien Notrufkommunikation mit Leitstellen und des ärztlichen Bereitschaftsdienstes und weiterer Third Party Service (TPS) Angebote. Diese kann per Video-, Sprach-, Chat- und/oder Datenkommunikation erfolgen, wobei die Notrufe mit und/oder ohne Unterstützungsleistungen ausgelöst werden können.

Das vorgestellte System ermöglicht einen revolutionären europäischen Gehörlosen-Notruf und darüber hinaus die Unterstützung von TPS, durch eine spezielle App. Bei Aktivierung des Notrufs in der App werden wichtige Informationen wie zum Beispiel persönliche und medizinische Daten des Notrufenden, die zuvor in der App hinterlegt wurden, sowie die aktuelle geografische Position, an einen zentralen Server übermittelt.

Das System umfasst ein Netzwerk aus Entitäten, wie zum Beispiel Smartphones und PCs, sowie Server und/oder einer oder mehrere Kommunikationseinrichtungen, welche zentral, in Clustern und/oder örtlich der jeweiligen Leitstelle bzw. dem ärztlichen Bereitschaftsdienst zugeordnet sind. Ferner sind die Entitäten, wie Smartphones und/oder PCs, dazu eingerichtet, vorzugsweise im Zusammenwirken mit einer App, einen Notruf an die zuständige Leitstelle zu adressieren und auszulösen. Die Entitäten, wie Leitstellen-PC und/oder Leitstellen-Software, sind dazu eingerichtet, die den Notrufen zugeordneten Datensätze zu empfangen, zu verarbeiten und mit den Notrufenden zu kommunizieren.

### Hintergrund und Stand der Technik

Notrufe erfolgen derzeit rufnummernbasiert im Telefonnetz und per Sprache bzw. Chat. Im Verhältnis zu anderen Kommunikationssystemen, wie Messenger, haben die Notrufsysteme mit der Entwicklung nicht Schritt gehalten. Dabei ist es jedoch essenziell, dass die Leitstellenmitarbeiter und Mitarbeiter vom ärztlichen Bereitschaftsdienst sich einen objektiven Eindruck von der Situation vor Ort verschaffen können und schnellstmöglich relevante Informationen zu der notrufenden Person erhalten.

Die Einführung des europäischen Notrufes 112 mit paketvermittelter Technik, wie NG112, wird von der Europäischen Kommission gefordert. Dazu hat sie die DELEGIERTE VERORDNUNG (EU) 2023/444 DER KOMMISSION vom 16. Dezember 2022 erlassen, um die Einführung IP-basierter Notfallkommunikation zu fördern. https://eur-lex.europa.eu/legal-content/DE/TXT/?uri=CELEX:02023R0444-20230302

Diese fordert die Kompatibilität, Interoperabilität, Qualität, Zuverlässigkeit und Kontinuität der Notfallkommunikation in der Union im Hinblick auf Lösungen zur Anruferstandort-Information, Zugang für Endnutzer mit Behinderungen und Weiterleitung zur am besten geeigneten Notrufabfragestelle. Die Gebärdenunterstützung ist per Video zu berücksichtigen. Mit dem Übergang zur All-IP-Kommunikation sollen verschiedene Mittel der Sprach-, Text- und Videokommunikation auch unter Roamingbedingungen genutzt werden.

Endnutzer mit Behinderungen werden befähigt, mindestens denselben Kenntnisstand über die Möglichkeiten des Zugangs zu Notdiensten über Notrufe zu erhalten wie andere Endnutzer über den Notruf unter der Nummer 112, entweder durch die Gestaltung der Zugangsmöglichkeiten oder durch Sensibilisierungsmaßnahmen. Bisher ist es jedem Land freigestellt die Barrierefreiheit zu gestalten.

Im Stand der Technik wird eine Anordnung zur Optimierung des Informationsaustausches bei Notrufen offenbart, die es ermöglicht, zusätzlich und zeitgleich zu Notrufen an die Notrufleitstellen, den Notruf ergänzende Informationen zu generieren und über einen zweiten Übertragungsweg an die Notrufleitstelle zu übertragen. In der Notrufleistelle wird zusätzlich zu dem bereits bestehenden ersten Monitorsystem für Notrufannahme ein zweites Monitorsystem für Notrufkommunikation und den Empfang bzw. Austausch der Zusatzinformationen installiert. Die Aufbereitung von Zusatzinformationen und die Übermittlung der zu einem Notruf zugeordneten Zusatzinformationen, einschließlich der Positionsdaten aus der Satellitennavigation, an die Notrufleitstelle, wird über einen Anwendungsserver, Gatewayserver ermöglicht. Die Übernahme der Daten erfolgt direkt bzw. über ein optisches Verfahren mit Kamerasystem. Mit einer integrierten Chatfunktion kann mit den Meldenden kommuniziert werden. Mit einer Fernbedienung, die mit der App verbindbar ist, können ereignisbezogene Notrufe ausgelöst werden.

Es existiert kein europäisch einheitliches barrierefreies Notrufverfahren, wodurch das Reisen für Menschen mit Behinderungen erschwert bzw. unsicher wird. Die TPS (Drittanbieter-Dienste) sind nicht direkt in das System eingebunden, so dass sich die Bearbeitungszeit von Notrufen erhöht.

### Aufgabe der Erfindung

Die Aufgabe der Erfindung war es daher die Nachteile aus dem Stand der Technik zu beseitigen und ein länderübergreifendes barrierefreies System zur Notrufbearbeitung unter Einbeziehung von europäischen Anforderungen, wie die Einführung des europäischen Notrufs 112 mittels paketvermittelter Technik, zu ermöglichen. Zudem sollte die Notrufbearbeitung durch eine Bild- und/oder Videoübertragung sowie Integration weiterer Kommunikationsarten, wie Sprache und Chat, optimiert werden.

### Zusammenfassung der Erfindung

Die erfindungsgemäße Aufgabe wird durch die Merkmale der unabhängigen Ansprüche gelöst.

Vorteilhafte Ausgestaltungen der Erfindung sind in den abhängigen Ansprüchen beschrieben.

Neu wird durch diese Erfindung die Nutzung einer App, die barrierefreie Notrufe ermöglicht und dabei vorzugsweise unter Verwendung der Positionsdaten der Entitäten, wie Smartphones und PCs, die Ermittlung der Adresse der zuständigen Leitstelle realisiert. Dazu werden im Serversystem die Daten der geografischen Bereiche der Leitstellen (vorzugsweise in Form von Polygonen) und die Ortsrufnummern (vorzugsweise die Langrufnummern der Leitstellen, zu denen die 112 bzw. 110 oder andere geleitet werden) bzw. die IP-Adressen (bzw. digitalen Adressierungen, wie SIP-Adresse) der Leitstellen gespeichert. Das Serversystem umfasst einen oder mehrere Server und/oder Servercluster inklusive einer Kommunikationseinrichtung. Die Server und/oder Servercluster inkl. Kommunikationseinrichtung können auch redundant ausgelegt sein. In der Leitstelle wird über die bereits vorhandene Kommunikationseinrichtung und/oder über einem am Leitstellen-Platz ausgeführten Kommunikations-Client kommuniziert. Ein Kommunikation-Client kann eine Webanwendung und/oder ein Computerprogramm und/oder eine App sein, welche die Kommunikation via Audio, Video, Chat und/oder Daten ermöglicht. Die App für Smartphones und PCs ermöglicht im Zusammenwirken mit dem Serversystem die korrekte ortsbezogene Auswahl der Notrufanwendung. Dabei sind die nationalen Besonderheiten, wie Erreichbarkeit der Polizei, Berg- und/oder Wasserrettung zu berücksichtigen.

Die zuständige Leitstelle wird anhand der aktuellen geografischen Position und/oder dem zugehörigen Zuständigkeitsbereich eines Rettungsdienstes bzw. eines PSAP (Public Safety Answering Point) und/oder der nächstgelegenen Rettungswache zum Notrufort und/oder dem errechneten/ermittelten schnellsten/optimalen Rettungsdienst/Rettungswache/PSAP ermittelt. Nutzer mit Unterstützungsbedarf, so auch aus dem Ausland, werden per Roaming zum TPS (Third Party Service) geleitet, der die weitere Kommunikation unterstützt.

Somit bietet es sich an, einen "Gehörlosen-Notruf" unter einheitlichen Bedingungen der Interoperabilität auch für das Roaming bereitzustellen. Dabei wird im Gegensatz zur manuellen Wahl der Nummer 112 über eine App bzw. Server die Notrufverbindung hergestellt, was den Vorteil hat, dass weitere Funktionalitäten und Nutzerdaten aus einer App nutzbar und übermittelbar sind und der Kommunikationskanal nahezu beliebig verknüpft und/oder kombiniert werden kann.

So wird in einem ersten Schritt und künftig nach Einführung von NG112 weiterhin als Legacy-Unterstützung das Direkt-Notruf-Verfahren durch Verwendung der Ortsrufnummern bzw. SIP-Adresse der Leitstellen verwendet.

Gehörlose werden durch Gebärdendolmetscher unterstützt, welche die Kommunikation mit der Leitstelle übernehmen. Künftig kann eine Direkt-Kommunikation zwischen Gehörlosen und Leitstelle durch Videoübertragung mit Avataren (z.B. Sign Language Avatar) erfolgen.

Persönliche Assistenzen, wie zum Beispiel in Smartspeakern und/oder Routern und/oder anderen Computer-ähnlichen Geräten in Form von Sprache und/oder Avatare und/oder Hologramme, werden genutzt, um optisch und/oder akustisch Situationen zu erfassen und auszuwerten und in entsprechenden Situationen Notrufe auszulösen und/oder anderweitige Unterstützung anzufordern. Die Situationen können automatisch und/oder durch KI und/oder durch Geste(n) und/oder durch Sprachkommandos und/oder Schalter/Tasten erkannt werden. Nach dem Herstellen einer Kommunikationsverbindung mit einer zuständigen und/oder ausgewählten Gegenstelle, wie Rettungsdienst, Feuerwehr, Polizei bzw. TPS, und/oder der Übermittlung entsprechender Daten zu dieser, können Video und/oder Audio und/oder Text und/oder Sensordaten für medizinische Daten, Schadstoffe, Feuer und/oder Einbruch übermittelt werden.

Die TPS-Anwendungsunterstützung wird für Personen und Objekte, hier vorzugsweise für
- Gehörlose
- Hausnotrufdienste
- 116 117 - Ärztlicher Bereitschaftsdienst
- eCall
- Sicherheitsdienste
betrachtet.

In einer bevorzugten Ausführungsform betrifft die Erfindung ein Verfahren und System zum barrierefreien länderübergreifenden Notruf, dadurch gekennzeichnet, dass das System ein Netzwerk aus Entitäten, wie Smartphones und PCs, sowie Server und/oder eine Kommunikationseinrichtung umfasst,
- wobei die Entität der Nutzer, wie Smartphone, PC, Laptop, Smartspeaker und/oder persönliche Assistenz, eine installierte App und/oder eine integrierte Anwendung mit einem zugeordneten Menü, und/oder einen Schalter, und/oder Sprach-/Geräusch- /Gestenerkennung und/oder Sensordaten zur Auslösung eines Notrufs sowie vorzugsweise ein Kommunikationsmodul und/oder ein Navigationsmodul verwendet,
- wobei die personenbezogenen Daten, auch optional für andere Personen, in einer App und/oder einem Datenspeicher der Entität gespeichert werden,
- wobei bedarfsweise ein Not- und/oder Telearzt und/oder Gebärdendolmetscher, auch jeweils mehrere, in die Notrufkommunikation eingebunden werden können,
- wobei die Funktionalitäten der Apps vollständig bzw. differenziert in die Betriebssysteme der Entitäten integriert sein können,
- wobei die Funktionalitäten der Apps vollständig bzw. differenziert durch eine persönliche Assistenz und/oder andere KI-basierte und/oder programmgesteuerte Avatare und/oder Hologramme bzw. deren zugrundeliegende Anwendungen realisiert werden,
- wobei bei Auslösung eines Notrufes über die App bzw. Anwendung die zuständige Leitstelle ermittelt wird und der Datensatz oder die Datensätze mit personenbezogenen Daten und/oder Vitaldaten und/oder Statusdaten verschlüsselt übertragen wird oder werden.

In einer weiteren bevorzugten Ausführungsform betrifft die Erfindung ein Verfahren und System zum barrierefreien länderübergreifenden Notruf, wobei anhand der aktuellen geografischen Position, und/oder gegebenenfalls Art des Notfalls, das optimalen Notrufverfahren und/oder -ziel, wie Inland Notrufverfahren, NG112 Inland/Ausland und/oder andere, ermittelt und zugeordnet werden,
- wobei bei einem Notruf, 112 und/oder weitere landestypische Notrufdienste ausgelöst werden und ein Notruf-Datensatz an den zuständigen Server übermittelt wird,
- wobei eine NG112-konforme Übermittlung des Notruf-Datensatz an die Leitstelle erfolgt,
- wobei eine NG112-konforme Adressierung durch Implementierung der Positionsdaten des Notrufenden durch TPS vorgenommen werden kann,
- wobei die länderübergreifende Kommunikation mit vorzugsweise serverseitigen Übersetzungen für Sprache und Chat und/oder Text-to-Speech und/oder Speech-to-Text erfolgt.

In einer weiteren bevorzugten Ausführungsform betrifft die Erfindung ein Verfahren und System zum barrierefreien länderübergreifenden Notruf,
- wobei bei Auslösung eines Notrufes über die App bzw. Anwendung die zuständige Leitstelle bzw. die Leitstelle anhand der aktuellen geografischen Position und/oder der nächstgelegenen Rettungswache zum Notrufort, optional unter Berücksichtigung der Verkehrssituation, ermittelt wird und/oder der Rettungsdienst, auch im Einsatz befindliche Fahrzeuge, direkt gerufen werden und/oder der durch verschiedene Faktoren ermittelte optimale Rettungsweg genutzt wird. In einer weiteren bevorzugten Ausführungsform betrifft die Erfindung ein Verfahren und System zum barrierefreien länderübergreifenden Notruf,
- wobei Notrufe aus der App an redundante Serversysteme übermittelt werden können, welche anhand der aktuellen geografischen Position und/oder gegebenenfalls Art des Notfalls, die Notrufe an die ermittelte Leitstelle weiterleiten und/oder für diese zum Abruf bereithalten,
- wobei alternativ ein Notruf mit der aktuellen geografischen Position an alle Leitstellen übermittelt wird und anhand der Positionsdaten die Zuständigkeit in der Leitstelle bzw. deren aktuell zuständige Ersatzleitstelle ermittelt wird.

In einer weiteren bevorzugten Ausführungsform betrifft die Erfindung ein Verfahren und System zum barrierefreien länderübergreifenden Notruf,
- wobei bei einem Notruf mit Unterstützungsbedarf über App oder Telefon eine Verbindung zum Third Party Service (TPS) hergestellt wird und über eine Sprach- und/oder Videoverbindung und/oder Chat mit dem Notrufenden kommuniziert wird und ein Notruf-Datensatz an den Server übermittelt wird,
- wobei anhand der Positionsdaten und gegebenenfalls Art des Notfalls mittels Geo-Routings die zuständige Leitstelle ermittelt und eine Verbindung über die Ortsrufnummer bzw. SIP-Adresse ausgelöst wird,
- wobei zwischen dem Third Party Service (TPS), dem Notrufenden und/oder der Leitstelle eine gemeinsame Konferenzschaltung herstellt werden kann,
- wobei der, optional vom Drittanbieter Service (TPS) aktualisierte, Notruf-Datensatz bzw. der vom Drittanbieter Service (TPS) eigenständig erstellte Datensatz an den Server, vorzugweise an einen AML-Endpunkt, übertragen und von der Leitstelle abgerufen und in das Einsatzleitsystem (ELS) übernommen wird,
- wobei alternativ ein Datensatz mit integrierter Rufnummer des TPS abgesandt wird und der Leitstellen-Disponent einen Rückruf auslöst,
- wobei Leitstellensysteme bzw. Kommunikationsanlagen der Leitstelle mit NG112-Funktionalität einen NG112-konformen Anruf erhalten können,
- wobei der TPS sich optional per Fernwartungstool auf das Gerät des Notrufenden aufschaltet, eine Telefonkonferenz mit der 112 herstellt und der Datensatz mit integrierter Rufnummer des Notrufenden an den Server, vorzugweise an einen AML-Server, übertragen wird und der TPS mit dem Leitstellen-Disponenten per Sprache kommuniziert.

In einer weiteren bevorzugten Ausführungsform betrifft die Erfindung ein Verfahren und System zum barrierefreien länderübergreifenden Notruf,
- wobei eine Videoverbindung zum Notrufenden ermöglicht wird,
- wobei hör- und/oder sprachgeschädigte Menschen einen Notruf mit Datensatz und/oder gleichzeig eine Videoverbindung zum Gebärdendolmetscher auslösen und der Leitstellen Disponent mit dem Gebärdendolmetscher kommuniziert,
- wobei eine Kommunikation zwischen sprach- und/oder hörgeschädigten Menschen und der Leitstelle vorzugsweise über Videoübertragung mit Avataren erfolgt, die die länderspezifischen Gebärdensprachen berücksichtigt. In einer weiteren bevorzugten Ausführungsform betrifft die Erfindung ein Verfahren und System zum barrierefreien länderübergreifenden Notruf,
- wobei ein Drittanbieter Service (TPS) bei einem in Bearbeitung befindlichen Vorgang, welcher nicht als Notruf eingegangen ist, die Notwendigkeit eines Notrufs aktivieren kann und dadurch ein Notruf durch den Server ausgelöst wird (Ortsrufnummer bzw. SIP-Adresse der zuständigen Leitstelle wählen und in die Kommunikation des TPS einbinden, Notruf-Datensatz an vorzugsweise AML-Server senden).

In einer weiteren bevorzugten Ausführungsform betrifft die Erfindung ein Verfahren und System zum barrierefreien länderübergreifenden Notruf,
- wobei ein Notruf ohne zusätzlichen Unterstützungsbedarf mit einer App, durch Anruf der 112 und/oder weiterer landestypischer Notrufdienste ausgelöst wird und ein Notruf-Datensatz an den zuständigen Server übermittelt wird,
- wobei die Nutzer mittels App eine Sprach-Notrufverbindung an die zuständige Leitstelle herstellen und einen Notruf-Datensatz, optional auch für eine ausgewählte andere Person, an den Server übermitteln,
- wobei von der Leitstelle ein Sprach-Notruf angenommen wird und der Notruf-Datensatz durch die Leitstelle vom Server mittels der Rufnummer des Notrufenden manuell oder automatisch abgerufen und in das ELS übernommen wird.

In einer weiteren bevorzugten Ausführungsform betrifft die Erfindung ein Verfahren und System zum barrierefreien länderübergreifenden Notruf,
- wobei die Übernahme des Datensatzes mit personenbezogenen Daten und/oder Statusdaten in das Einsatzleitsystem der Leitstelle durch eine Schaltfläche bzw. eine Funktion des Webinterface erfolgt und die vorab festgelegten Datenblöcke strukturiert und Schadcoderesistent in die Eingabemaske eingetragen werden,
- wobei zur Schadcode-resistenten Datenübertragung zwischen Webinterface und Einsatzleitsystem digitale, akustische, vorzugsweise optische Übertragungsverfahren eingesetzt werden,
- wobei bei der optischen Übertragung aus den für das Einsatzleitsystem relevanten Daten ein (oder mehrere) maschinenlesbarer Code, Lichtfolge und/oder Grafik, vorzugsweise ein QR-Code, generiert und im Webinterface angezeigt wird,
- wobei der im Webinterface angezeigte QR-Code mit einem QR-Code-Scanner oder eine Kamera ausgelesen wird und der Scanner bzw. die Kamera vorzugsweise über USB mit dem PC des Einsatzleitsystems verbunden ist und die Datenblöcke in die Eingabemaske eingetragen werden.

In einer weiteren bevorzugten Ausführungsform betrifft die Erfindung ein Verfahren und System zum barrierefreien länderübergreifenden Notruf,
- wobei die übermittelten Datensätze und die Kommunikation vorzugsweise von in der Leitstelle befindlichen und/oder direkt angebundenen Servern/Kommunikationseinrichtungen empfangen bzw. realisiert wird,
- wobei alternativ die Telefonanlage/PBX bzw. Kommunikationseinrichtung der Leitstelle genutzt werden kann,
- wobei proprietäre Apps über den oder die Server integriert werden können.

In einer weiteren bevorzugten Ausführungsform betrifft die Erfindung ein Verfahren und System zum barrierefreien länderübergreifenden Notruf, wobei die Übernahme des Datensatzes mit Statusdaten und personenbezogenen Daten in das Einsatzleitsystem der Leitstelle über die Schnittstelle zum eCall System (Router, Decoder) erfolgt.

In einer weiteren bevorzugten Ausführungsform betrifft die Erfindung ein Verfahren und System zum barrierefreien länderübergreifenden Notruf, wobei bei einem im Callcenter Third-Party-Services eingehendem TPS-eCall, durch Auslösen eines ReCall der automatische eCall im Fahrzeug ausgelöst wird.

In einer weiteren bevorzugten Ausführungsform betrifft die Erfindung ein Verfahren und System zum barrierefreien länderübergreifenden Notruf,
- wobei bei Nichtannahme eines Notrufs und/oder Nichtzustandekommen einer Notrufverbindung, der Notruf zu einer Ersatz-Leitstelle weitergeleitet oder eine Alternativfunkverbindung hergestellt wird,
- wobei bei fehlendem Mobilfunknetz automatisch die Verbindung zu verfügbaren Hotspots hergestellt werden kann.

In einer weiteren bevorzugten Ausführungsform betrifft die Erfindung ein Verfahren und System zum barrierefreien länderübergreifenden Notruf, wobei Notruf-Datensätze bestimmter Kategorien, wie "Überfall", zusätzlich für autorisierte Nutzer, wie Polizei, mit einer Entität abrufbar sind, wenn das Ereignis im Bereich ihres aktuellen Standortes und/oder ihrer Zuständigkeit liegt.

In einer weiteren bevorzugten Ausführungsform betrifft die Erfindung ein Verfahren und System zum barrierefreien länderübergreifenden Notruf, wobei die Leitstellen untereinander vorzugsweise per Video-, Sprach-, Chat- und/oder Datenkommunikation zusammenarbeiten und optional Notrufe weiterleiten oder gemeinsam bearbeiten können.

In einer weiteren bevorzugten Ausführungsform betrifft die Erfindung ein Verfahren und System zum barrierefreien länderübergreifenden Notruf, wobei der ärztliche Bereitschaftsdienst vorzugsweise in das Leitstellensystem integriert ist.

In einer weiteren bevorzugten Ausführungsform betrifft die Erfindung ein Verfahren und System zum barrierefreien länderübergreifenden Notruf,
- wobei von vorzugsweise beweglichen/ortsveränderlichen Entitäten die aktuelle geografische Position und/oder andere sich verändernde Status- oder Vitaldaten einmalig und/oder kontinuierlich/periodisch übermittelt werden,
- wobei Notrufe aus nomadischen Unternehmensnetzen von PC und/oder stationären öffentlich zugänglichen Notrufstellen und/oder Alarmanlagen abgesetzt werden können und dazu vorzugsweise die Adressen, wie Ortsrufnummern bzw. SIP-Adresse der zuständigen Leitstellen genutzt werden.

In einer weiteren bevorzugten Ausführungsform betrifft die Erfindung ein Verfahren und System zum barrierefreien länderübergreifenden Notruf,
- wobei die relevanten Daten per Code-/Datenübertragung an den Rettungsdienst und von diesem an die medizinische Einrichtung übermittelt werden,
- wobei die Übertragung in das ELS, zum Rettungsdienst und/oder zur medizinischen Einrichtung per Datentransfer und/oder optisch und/oder akustisch stattfinden kann,
- wobei die Kommunikationsdaten archiviert und über eine Kennung (ID, Auftragsnummer, etc.) dem Einsatzleitsystem zugeordnet werden.

In einer weiteren bevorzugten Ausführungsform betrifft die Erfindung ein Verfahren zum barrierefreien Notruf umfassend folgende Schritte:
a) Auslösen eines Notrufes ausgehend von einer Entität (15, 16, 17, 18, 19, 21) eines Nutzers,
b) Speicherung von personenbezogenen Daten in einer App (15, 16, 17, 18, 19, 21) und/oder einem Datenspeicher der Entität (15, 16, 17, 18, 19, 21) und/oder auf einem Serversystem (11),
c) bedarfsabhängige Einbindung (insbesondere via Schnittstelle und/oder angepasste Client-App/-Anwendung) von Services und/oder Unterstützung in den Notruf,
d) Übertragung von mindestens einem Datensatz (20a) ausgehend von der Entität (15, 16, 17, 18, 19, 21) des Nutzers an eine zuständige Leitstelle (10) und/oder Callcenter Third-Party-Services (TPS) (14),

In einer weiteren bevorzugten Ausführungsform betrifft die Erfindung ein Verfahren zum barrierefreien Notruf,
a) wobei ein Notruf ausgehend von einer Entität (15, 16, 17, 18, 19, 21) eines Nutzers ausgelöst wird,
b) wobei personenbezogene Daten in einer App (15, 16, 17, 18, 19, 21) und/oder einem Datenspeicher der Entität (15, 16, 17, 18, 19, 21) und/oder auf einem Serversystem (11) gespeichert werden,
c) wobei bedarfsabhängig Services und/oder Unterstützung in den Notruf eingebunden (insbesondere via Schnittstelle und/oder angepasste Client-App/-Anwendung) wird,
d) Wobei mindestens ein Datensatz (20a) ausgehend von der Entität (15, 16, 17, 18, 19, 21) des Nutzers an eine zuständige Leitstelle (10) und/oder Callcenter Third-Party-Services (TPS) (14) übertragen wird, wobei der mindestens eine Datensatz (20a) geographische Daten, Kommunikationsdaten, personenbezogene Daten, Vitaldaten und/oder Statusdaten umfasst.

Die Erfindung betrifft also in einem Aspekt ein Verfahren zum barrierefreien Notruf, der von diversen geeigneten technischen Geräten ausgehen kann. Auf dem technischen Gerät selbst, welches den Notruf auslösen kann, insbesondere in einer darauf gespeicherten App, und/oder auf einem Serversystem können personenbezogene Daten des Notrufenden gespeichert sein. Diese gespeicherten Daten, sowie geographische Daten, Vitaldaten, Statusdaten und/oder andere Daten des Nutzers werden im Falle des Auslösens eines Notrufs an die Leitstelle übertragen. Außerdem bietet der barrierefreie Notruf durch eine Schnittstelle und/oder angepasste Client-App/-Anwendung die Möglichkeit der bedarfsabhängigen Einbindung weiterer unterstützender Dienste. Dies können zum Beispiel Gebärdendolmetscher, Ärzte, und/oder andere sein.

Ein Notruf ist bevorzugt ein Signal, welches übermittelt wird, um bei einem Notfall entsprechende professionelle Helfer zu verständigen.

Barrierefrei bedeutet bevorzugt, dass das Absetzen eines Notrufs und/oder die Kommunikation mit der Leitstelle und/oder einer Servicestelle für hörende sowie hör- und/oder sprachgeschädigte Menschen möglich ist. Es ist vorteilhaft, dass entsprechend der Erfindung hör-, sprachgeschädigte und hörende Menschen in die gleiche Notruf-Infrastruktur eingebunden werden können. Dies kann vorteilhafterweise die Effizienz und Effektivität der Notfallreaktion erhöhen.

Eine Entität kann bevorzugt diverse technische Geräte umfassen, wie Handy, Telefon, Smartphone, Computer, Smartspeaker, Notrufknopf, Notrufschalter, und/oder spezielle Notrufgeräte und/oder Systeme, wie sie zum Beispiel für pflegebedürftige Menschen zum Einsatz kommen, und/oder andere. Die Entitäten können mobil und/oder stationär sein.

Personenbezogene Daten können diverse persönliche sowie medizinische Daten den Nutzer betreffend umfassen. Beispielhaft könnten dies sein: Wohnort, Alter, Geschlecht, Notfallkontakte, Vorerkrankungen, Allergien, Medikation, und/oder andere. Dies kann vorteilhaft sein, da die professionellen Helfer in einer Notsituation spezifischere Informationen über die Person erhalten können, die den Notruf abgesetzt hat, selbst wenn diese zum Beispiel bei Eintreffen der Helfer nicht in der Lage sein sollte, selbst Auskunft zu geben. Hierdurch können vorteilhafterweise spezifischere Hilfemaßnahmen eingeleitet werden, und/oder Behandlungsfehler aufgrund von fehlenden Informationen vermieden werden.

Eine erfindungsgemäße Schnittstelle und/oder angepasste Client-App/-Anwendung kann bevorzugt die Einbindung diverser Anbieter in einen Notruf ermöglichen, wie zum Beispiel Notarzt, Telearzt, und/oder Gebärdendolmetscher und/oder andere. Die Schnittstelle und/oder angepasste Client-App/- Anwendung kann bevorzugt die Hinzuschaltung über Daten, Chat, Sprache und/oder Video ermöglichen. Hierdurch wird vorteilhafterweise gewährleistet, dass sowohl hörende als auch hör- und/oder sprachgeschädigte Menschen mit dem Auslösen eines Notrufs eine bedarfsgerechte Kommunikationsunterstützung erhalten können, sowie gegebenenfalls direkte Handlungsempfehlungen eines Notarztes und/oder Telearztes erhalten können. Es ist besonders vorteilhaft, dass die Kommunikation durch die bedarfsabhängige direkte Einbindung von Gebärdendolmetschern auch für hörgeschädigte und/oder sprachgeschädigte Menschen ebenso unkompliziert wird, wie für hörende Menschen. Eine unkomplizierte und/oder effiziente Kommunikation ist insbesondere in Notsituationen wichtig.

Ein Datensatz kann bevorzugt Standortdaten, personenbezogene Daten, Statusdaten, Vitaldaten und/oder andere umfassen. Es ist auch möglich, dass der Datensatz weitere Daten beinhaltet, wie Schadstoffdaten, oder andere Daten, die zum Beispiel mittels Sensoren detektiert werden können. Dies ist vorteilhaft, da hierdurch spezifischere Hilfeantworten und/oder Vorkehrungen möglich werden.

Eine Leitstelle ist bevorzugt zuständig für die Entgegennahme der Notrufe, Auswertung der Informationen, und/oder Koordination der entsprechenden Dienste.

In einer weiteren bevorzugten Ausführungsform betrifft die Erfindung ein Verfahren zum länderübergreifenden barrierefreien Notruf.

Länderübergreifend bedeutet bevorzugt, dass der Notruf über mehrere Bundesländer und/oder Länder hinweg gleichermaßen funktioniert. Dies ist vorteilhaft, da man somit unabhängig vom Aufenthaltsort schnell Hilfe erhalten kann, da die Verbindung zur zuständigen Leitstelle hergestellt wird. Zudem müssen eventuelle landesspezifische Besonderheiten in Bezug auf den Notruf nicht erst in Erfahrung gebracht werden, wenn der Notruf z.B. über eine App ausgelöst wird und/oder die Kommunikationsverbindung durch ein Serversystem realisiert wird.

In einer weiteren bevorzugten Ausführungsform betrifft die Erfindung ein Verfahren, bei dem die Übertragung des Datensatzes verschlüsselt ist.

Verschlüsselt bedeutet bevorzugt, dass eine sichere Übertragung des Datensatzes gewährleistet wird, die den Datensatz davor schützt, von dritten gelesen zu werden. Dies ist vorteilhaft, da der Datensatz sensible Informationen enthalten kann, wie Standortdaten, persönliche Daten, Gesundheitsdaten und/oder andere.

In einer weiteren bevorzugten Ausführungsform betrifft die Erfindung ein Verfahren, bei dem die Entität der Nutzer, ein Smartphone, PC/Laptop, Smartspeaker und/oder persönliche Assistenz, bevorzugt eine installierte App und/oder eine integrierte Anwendung mit einem zugeordneten Menü, und/oder einen Schalter, und/oder Sprach-/Geräusch-/Gestenerkennung und/oder Sensordaten zur Auslösung eines Notrufs, sowie bevorzugt ein Kommunikationsmodul und/oder ein Navigationsmodul umfasst.

Ein Kommunikationsmodul überträgt bevorzugt die zu übertragenden Daten entsprechend dem bevorzugten Kommunikationsstandard. Das Kommunikationsmodul übernimmt somit das Sende- und Empfangsprotokoll, ggf. die Verschlüsselung und/oder Verwaltung der Daten, und/oder die Ansteuerung der entsprechenden Übertragungsphysik. Es kann sich dabei sowohl um eine Hardwareals auch um eine Softwarekomponente handeln. Diese kann sowohl drahtgebunden als auch drahtlos erfolgen. Ein Kommunikationsmodul ist vorteilhaft, da hierdurch eine schnelle und zuverlässige Datenübertragung geschaffen wird. Es kann ebenfalls vorteilhaft sein, dass Kommunikationsmodule eine robuste Netzwerkinfrastruktur schaffen. Es kann ebenfalls vorteilhaft sein, dass Kommunikationsmodule eine Vielzahl von Kommunikationsprotokollen unterstützen und so die Kompatibilität mit vielen Geräten und Systemen gewährleisten können.

Ein Navigationsmodul ist bevorzugt ein technisches Element, welches die geografische Ortung der Entität zum Beispiel per GPS ermöglicht. Dies ist vorteilhaft, da die Ortung per GPS genauer ist als die Ortung zum Beispiel per Sendemasten. Dies ist weiterhin vorteilhaft, weil es auch die Ortung von Geräten erlaubt, die sich nicht im Mobilnetzwerk befinden.

In einer weiteren bevorzugten Ausführungsform betrifft die Erfindung ein Verfahren, bei dem eine Schnittstelle und/oder angepasste Client-App/-Anwendung zu einem Notarzt, Telearzt und/oder Gebärdendolmetscher genutzt wird, wobei bevorzugt der Gebärdendolmetscher ein Mensch oder ein Avatar zur Gebärdendolmetschung sein kann.

Die Schnittstelle und/oder angepasste Client-App/-Anwendung kann also bevorzugt eine Verbindung zu Drittanbietern bereitstellen und eine Verbindung zwischen Nutzern und Notarzt, Telearzt, und/oder Gebärdendolmetscher oder anderen beinhalten. Bevorzugt wird eine Schnittstelle und/oder angepasste Client-App/-Anwendung bedarfsgerecht und/oder zur Unterstützung der Kommunikation zusätzlich zur Verbindung zur Leitstelle hinzugeschaltet. Hierdurch wird vorteilhafterweise eine schnelle und unkomplizierte Kommunikation zwischen Nutzer/Notrufenden und Leitstelle, und/oder eine umgehende Hilfeleistung ermöglicht.

In einer weiteren bevorzugten Ausführungsform betrifft die Erfindung ein Verfahren, bei dem die zuständige Leitstelle (10) zur Entität (15, 16, 17, 18, 19, 21) des Nutzers eine geringste räumliche oder zeitliche Distanz aufweist.

In einer weiteren bevorzugten Ausführungsform wird die Leitstelle (10) anhand der aktuellen geografischen Position der Entität (15, 16, 17, 18, 19, 21) des Nutzers unter Berücksichtigung der geringsten räumlichen oder zeitlichen Distanz, auch zur nächstgelegenen zugehörigen Rettungswache, ermittelt und optional die Verkehrssituation berücksichtigt, und/oder der Rettungsdienst, auch im Einsatz befindliche Fahrzeuge, direkt gerufen werden und/oder der durch verschiedene Faktoren ermittelte optimale Rettungsweg genutzt wird.

Eine geringste räumliche oder zeitliche Distanz bezeichnet bevorzugt, dass abhängig von der Auslastung, der Verkehrssituation, Baustellen, Witterungsbedingungen, und/oder anderen, die Leitstelle ermittelt wird, die die schnellste Hilfe bereitstellen kann. Dies kann Situationsabhängig auch eine andere Leitstelle sein als die mit der geringsten räumlichen Distanz. Dies ist vorteilhaft, da somit abhängig von den aktuellen Bedingungen Hilfe schnellstmöglich gewährleistet werden kann.

In einer weiteren bevorzugten Ausführungsform betrifft die Erfindung ein Verfahren, bei dem
a) Datensätze geografischer Bereiche, bevorzugt in Form von Polygonen der Zuständigkeitsbereiche, und/oder Datensätze mit den digitalen Adressen, den Zuständigkeitsbereichen sowie optional den Versionen der Einsatzleitsysteme der Leitstellen (10) von zum Beispiel Polizei, Feuerwehr/Rettungsdienst und anderen genutzt werden,
b) anhand der aktuellen geografischen Position, und gegebenenfalls Art des Notfalls, das optimale Notrufverfahren und -ziel, wie zum Beispiel Inland Notrufverfahren, NG112 Inland/Ausland und/oder andere, ermittelt und zugeordnet werden,
c) beim Auslösen eines Notrufs, 112 und/oder weiterer landestypischer Notrufdienste ein Notruf-Datensatz (20a) an den zuständigen Server (11, 12) übermittelt wird,
d) von insbesondere beweglichen/ortsveränderlichen Entitäten die aktuelle geografische Position und/oder andere sich verändernde Status- und/oder Vitaldaten und/oder andere einmalig und/oder kontinuierlich/periodisch übermittelt werden,
e) die länderübergreifende Kommunikation mit serverseitigen Übersetzungen für Sprache, Chat, Text-to-Speech und/oder Speech-to-Text erfolgt,
f) alternativ zu b) ein Notruf mit der aktuellen geografischen Position an alle Leitstellen (10) übermittelt wird und anhand der Positionsdaten die Zuständigkeit in der Leitstelle (10) bzw. deren aktuell zuständige Ersatzleitstelle (10) ermittelt wird.

In einem Aspekt betrifft die Erfindung also die Situation, in der ein Notruf abgesetzt wird, wobei die Zuständigkeitsbereiche zur Reaktion auf den Notruf in Form von Polygonen organisiert sind, und/oder die digitalen Adressen mitsamt den Zuständigkeitsbereichen genutzt werden. Um eventuellen Problemen durch versionsbedingte Anpassungen und/oder herstellerspezifische Gegebenheiten der Einsatzleitsysteme zum Beispiel in Bezug auf Eingabemasken und/oder Datenfelder zuvorzukommen, können die Typen und/oder Versionen der jeweils genutzten Einsatzleitsysteme der Leitstellen gespeichert werden. Mit dem Auslösen eines Notrufes wird der Datensatz des Notrufenden an das erfindungsgemäße Serversystem gesendet. Hierbei wird das Notrufverfahren und -ziel abhängig von der geografischen Position und ggf. der Art des Notfalls auf dem Serversystem ermittelt. Hiermit ist gemeint, dass abhängig von der geografischen Position des Notrufenden die entsprechend passenden Verfahren angewendet werden, wie zum Beispiel Inlandsnotruf, Auslandsnotruf, NG112. Die möglichen Inhalte des Datensatzes können hierbei verschiedene Daten umfassen, wie zum Beispiel die auf dem Gerät des Nutzers gespeicherten persönlichen Daten, geographische Daten, Vitaldaten, Statusdaten, und/oder andere. Falls der Notruf insbesondere, aber nicht nur von einem sich bewegenden Gerät aus abgesetzt wird, gibt es die Möglichkeit, dass sich verändernde Daten (zum Beispiel Positionsdaten, Statusdaten, Vitaldaten und/oder andere) sowohl einmalig als auch mehrmalig (kontinuierlich/periodisch) übermittelt werden. Alternativ hierzu kann auch ein Notruf die aktuelle geographische Position an alle Leitstellen übermitteln, sodass anhand der geographischen Position die Zuständigkeit der Leitstelle ermittelt werden kann. Die Kommunikation kann bei Notwendigkeit unterstützt mittels serverseitiger Übersetzung für Sprache erfolgen. Alternativ kann der Notruf aus einem zum Beispiel vom Internet abgeschnittenen Gebiet an alle Leitstellen in einem Gebiet übermittelt werden, sodass dann bevorzugt die Technik der Leistelle entscheiden kann, ob der Notruf angenommen wird.

Datensätze geografischer Bereiche in Form von Polygonen bedeutet bevorzugt, dass die Zuständigkeitsbereiche umgrenzt sind von einem Vieleck mit mindestens drei nicht kollinearen Eckpunkten, die durch einen Streckenzug (Polygonzug) verbunden sind. Dies kann vorteilhaft sein, da dadurch eine genauere Lokalisierung eines Notrufs auch in Gebieten mit komplexer Topografie oder dichter Bebauung besser möglich wird. Es kann ebenfalls vorteilhaft sein, da die Ressourcen effizienter verteilt werden können, und/oder die Reaktionszeit verkürzt werden kann. Weiter vorteilhaft kann es sein, dass die an der Rettung beteiligten Organisationen sich besser koordinieren können, da es klare Zuständigkeitsgrenzen gibt. Aus technischer Sicht vorteilhaft kann es sein, dass durch eine geografische Berechnung, ob sich ein geografischer Punkt (Standort des Notrufenden) in einem Polygon (Zuständigkeitsbereich) befindet, sehr schnell der Zuständigkeitsbereich ermitteln lässt.

Bei NG112 handelt es sich bevorzugt um eine Architektur für Notrufnetzwerke basierend auf IP-Technologie und dem Session Initiation Protocol (SIP), die es ermöglicht, Notrufe über IP-Netzwerke zu vermitteln. NG112 kann durch öffentlich verfügbare Standards standardisiert sein. Dies ist vorteilhaft, da es erlaubt, unterschiedliche Notrufservices zu integrieren. Weiter vorteilhaft kann es sein, dass Notrufe über NG112 Standard neben klassischer Kommunikation über Audio auch Video, Text und Integration von Sensoren sowie Technologien des Internets der Dinge, ermöglichen. Hierdurch kann vorteilhafterweise die Übermittlung einer Vielzahl an Informationen möglich werden, die es erlauben kann, notwendige Informationen über ein Medium, also innerhalb des Sprachnotrufes, zu übermitteln und/oder Einsätze spezifischer zu gestalten.

Die Übermittlung eines Notrufdatensatzes an den Server bedeutet bevorzugt, dass unabhängig vom Zustandekommen sonstiger Kommunikation zwischen Nutzer und Leitstelle, bereits beim Absetzen eines Notrufs ein Datensatz an den zuständigen Server übermittelt wird. Dies kann zum Beispiel vorteilhaft sein, wenn Informationen vom Nutzer selbst über die anderen Wege (z.B. Chat, Sprache, Video) nicht, oder nur unvollständig an die Leistelle übermittelt werden können. Es kann auch vorteilhaft sein, wenn der Nutzer seinen eigenen Standort nicht angeben kann. Es kann auch vorteilhaft sein, wenn in dem Datensatz weitere zusätzliche Informationen enthalten sind, die dem Nutzer unbekannt sein können. Ebenso kann dies vorteilhaft sein, wenn der Nutzer einen "stillen" Notruf absetzt, weil er sich beispielweise in einer bedrohlichen Situation befindet.

Insbesondere, aber nicht nur bei länderübergreifender Kommunikation kann es bevorzugt sein, dass es eine serverseitige Übersetzung für Sprache, Chat, Text-to-Speech, oder Speech-to-Text gibt. Dies erleichtert die Kommunikation trotz eventueller Sprachbarrieren. Dies kann vorteilhaft sein, wenn ein Nutzer in einem Land einen Notruf absetzt, in dem er die Landessprache nicht, oder nicht gut beherrscht.

In einer weiteren bevorzugten Ausführungsform betrifft die Erfindung ein Verfahren, bei dem
a) eine Übernahme des Datensatzes (20a) mit personenbezogenen Daten und/oder Statusdaten in ein Einsatzleitsystem der Leitstelle (10b) durch eine Schaltfläche und/oder eine Funktion eines Webinterfaces (10a) und/oder durch Sprachsteuerung und/oder Gestensteuerung erfolgt und vorab festgelegte Datenblöcke strukturiert und Schadcoderesistent in die Eingabemaske des Einsatzleitsystems (10b) eingetragen werden,
b) zur Schadcode-resistenten Datenübertragung zwischen Webinterface (10a) und Einsatzleitsystem (10b) digitale, akustische, und/oder optische Übertragungsverfahren eingesetzt werden,
c) bei einer optischen Übertragung aus den für das Einsatzleitsystem (10b) relevanten Daten ein (oder mehrere) maschinenlesbarer Code, Lichtfolge und/oder Grafik, vorzugsweise ein QR-Code, generiert und im Webinterface (10a) angezeigt wird,
d) der im Webinterface (10a) angezeigte QR-Code (und/oder maschinenlesbare Code, Lichtfolge und/oder Grafik) mit einem QR-Code-Scanner und/oder einer Kamera ausgelesen wird und der QR-Code-Scanner und/oder die Kamera zur Datenübertragung vorzugsweise über USB mit dem PC des Disponenten verbunden ist und die Datenblöcke in die Eingabemaske des Einsatzleitsystems (10b) eingetragen werden.

In einem Aspekt betrifft die Erfindung also ein Verfahren zur Übernahme, der vom Notrufenden mit Auslösen des Notrufs übermittelten Daten (zum Beispiel personenbezogene Daten, Statusdaten, und/oder andere), in ein Einsatzleitsystem der Leitstelle. Diese Übernahme soll schadcoderesistent erfolgen. Hierfür können die Daten in Form von vorab festgelegten Datenblöcken strukturiert und schadcoderesistent mittels einer Schaltfläche und/oder einer Funktion eines Webinterfaces und/oder durch Sprachsteuerung und/oder Gestensteuerung in die Eingabemaske des Einsatzleitsystems übernommen werden. Die Übertragung kann mittels digitalen, akustischen, und/oder optischen Übertragungsverfahren erfolgen. Zur optischen Übertragung kann ein maschinenlesbarer Code im Webinterface generiert werden, der dann vom Disponenten mit einem Scanner oder einer Kamera ausgelesen werden kann. Auf der Seite des Einsatzleitsystems werden die Daten in die entsprechenden Felder der Eingabemaske eingefügt, da vorzugsweise der Scanner als Eingabegerät/Tastatur fungiert.

Es kann bevorzugt sein, dass die Leitstelle den übermittelten Datensatz zum eingegangenen Notruf durch eine Schaltfläche und/oder durch Sprachsteuerung und/oder Gestensteuerung in das Einsatzleitsystem übernimmt. Hierdurch werden die übermittelten Daten vorteilhafterweise in eine Eingabemaske übertragen, in dem die Daten digital übertragen und für den Notrufdisponenten durch das Einsatzleitsystem übersichtlich angezeigt werden, wodurch vorteilhafterweise eine effiziente Bearbeitung des Notrufs möglich wird.

Digitale Übertragung der Daten vom Web-Interface in das Einsatzleitsystem kann bevorzugt sein, weil er eine effiziente und zuverlässige Kommunikation ermöglicht. Optische Übertragungswege wie zum Beispiel QR-Codes und/oder akustische Übertragungswege sind hierbei vorteilhafterweise weniger anfällig für Malware-Angriffe und Manipulationen. Weiter vorteilhaft kann es sein, dass durch die physische Nähe, die zur Datenübertragung notwendig sein kann, das Risiko von Fernangriffen verringert wird. Weiter vorteilhaft kann es sein, dass keine direkte Datenübertragung zwischen den Geräten stattfindet, wodurch ebenfalls die Sicherheit erhöht wird. Durch die Schadcode-resistente Übernahme der übermittelten Daten wird vorteilhafterweise das Einsatzleitsystem vor Schadcode geschützt. Dieser Schutz ist vorteilhaft, da es sich bei Einsatzleitsystemen um kritische Infrastruktur handelt, die besonders vor Schadcode geschützt werden muss, um einsatzfähig zu bleiben.

In einer weiteren bevorzugten Ausführungsform betrifft die Erfindung ein Verfahren, bei dem
a) übermittelte Datensätze (20a) und/oder eine Kommunikation vorzugsweise von in der Leitstelle (10) befindlichen und/oder angebundenen Servern empfangen und/oder realisiert wird,
b) alternativ eine Telefonanlage/PBX und/oder eine Kommunikationseinrichtung der Leitstelle (10) genutzt werden kann.

In einem weiteren Aspekt betrifft die Erfindung also ein Verfahren, bei dem die Kommunikation vorzugsweise über Server empfangen und/oder umgesetzt wird, die an die Leitstelle angebunden, oder in der Leitstelle befindlich sind. Alternativ zu der im Serversystem realisierten Kommunikationseinrichtung kann die Leitstelle eine eigene Kommunikationseinrichtung und/oder Telefonanlage/PBX nutzen. Dies kann beispielweise erforderlich sein, wenn die zentrale Kommunikationseinrichtung nicht verfügbar ist und/oder geltende Vorschriften dies verlangen.

In einer weiteren bevorzugten Ausführungsform betrifft die Erfindung ein Verfahren, bei dem
a) Funktionalitäten von Apps vollständig oder differenziert in Betriebssysteme der Entitäten integriert sind,
b) optional proprietäre Apps über den oder die Server integriert sind.

In einem weiteren Aspekt betrifft die Erfindung also die Integration der Funktionalitäten der Apps in die Betriebssysteme der Entitäten. Dies führt bevorzugt dazu, dass keine Installation und/oder Vorbereitung durch den Nutzer notwendig ist, um einen erfindungsgemäßen Notruf abzusetzen. Durch die optionale Integration proprietärer Apps in den und/oder die Server, wird es bevorzugt ermöglicht, dass das System von anderen Herstellern von insbesondere Sicherheitsanwendungen genutzt werden kann.

Der Einsatz von in der Leitstelle befindlichen und/oder direkt angebundenen Servern kann vorteilhaft sein, da so ein hoher Standard an Datenschutz gewährleistet werden kann. Außerdem kann es vorteilhaft sein, dass durch den Betrieb eigener Server, die Leitstelle sicherstellen kann, dass ihre Kommunikations- und Informationssysteme jederzeit zuverlässig und verfügbar sein können. Außerdem ist vorteilhafterweise eine Anpassung an spezifische Anforderungen der Leitstelle und der Abläufe möglich.

Bei einer Telefonanlage, PBX (Private Branch Exchange), Kommunikationseinrichtung kann es sich bevorzugt um ein privates Telefonnetz/Kommunikationseinrichtung in einer Leitstelle handeln. Dies kann vorteilhaft sein, da es eine effiziente Anrufverteilung an die entsprechenden Mitarbeiter ermöglichen kann, was zu kürzeren Reaktionszeiten führen kann. Die Mitarbeiter können vorteilhafterweise intern effizient miteinander kommunizieren, was die Koordination erleichtert. Weiter vorteilhaft können die Zuverlässigkeit und Kontrolle eines solchen Systems sein. Ebenso vorteilhaft ist es für den Datenschutz und die Sicherheit.

Bei der Integration der Funktionalitäten in die Betriebssysteme der Entitäten wird bevorzugt keine App und/oder Anwendung mehr benötigt, da diese Bestandteil der vorinstallierten Funktionen des Gerätes sind. Vorteilhaft ist hierbei, dass jeder Nutzer einer dieser Entitäten ohne vorherige Installation bzw. Vorbereitung in der Lage ist, einen erfindungsgemäßen Notruf abzusetzen.

Die optionale Integration proprietärer Apps in den und/oder die Server ermöglicht die Nutzung des Systems durch zum Beispiel andere Hersteller von Sicherheitsanwendungen. Dies kann vorteilhaft sein, wenn Nutzer eine bevorzugte Benutzeroberfläche nutzen wollen und/oder größere Softwaresysteme um die erfindungsgemäße Notruf-Funktionalität erweitert werden sollen.

In einer weiteren bevorzugten Ausführungsform betrifft die Erfindung ein Verfahren, bei dem
a) eine Übernahme des Datensatzes (20a) mit Statusdaten und/oder personenbezogenen Daten in das Einsatzleitsystem der Leitstelle (10b) über die Schnittstelle zum eCall System (z.B. Router, Decoder) erfolgt, und/oder
b) bei einem im Callcenter Third-Party-Services (TPS) (14) eingehendem TPS-eCall, durch Auslösen eines ReCall der automatische eCall in einem Fahrzeug ausgelöst wird.

In einem Aspekt betrifft die Erfindung also ein Verfahren, welches das eCall-System von Fahrzeugen einschließt. Hierbei kann der vom Notrufenden übermittelte Datensatz, dem vom Fahrzeug beim eCall genierten Datensatz entsprechen und auch auf die gleiche Weise übertragen werden, der in das Einsatzleitsystem der Leitstelle übernommen werden kann. Wenn ein Fahrzeug ein Third-Party-Service eCall installiert hat, so kann im Callcenter des Third-Party-Service gegebenenfalls ein ReCall ausgelöst werden, der den automatischen eCall im notrufenden Fahrzeug auslöst, und somit gewährleistet, dass der ausgehende Notruf im Bedarfsfall in das öffentliche Notrufsystem gelangt.

Bei einem eCall handelt es sich bevorzugt um einen Notruf, der aus einem Fahrzeug heraus abgesetzt werden kann. Der Notruf kann z.B. durch Drücken eines Knopfes im Fahrzeug ausgelöst werden, und/oder er kann durch das Fahrzeug selbst, wenn es einen Unfall detektiert, ausgelöst werden. Es kann vorteilhaft sein, den Datensatz mit der eCall-Schnittstelle in das Einsatzleitsystem übernehmen zu können, da hierdurch keine zusätzliche Schnittstelle zur digitalen sofortigen Übernahme der Notfalldaten in das Einsatzleitsystem bereitgestellt werden muss und der Datensatz weitere Details zum Notfall enthalten kann.

Bei Third-Party-Services (TPS) handelt es sich bevorzugt um Anbieter von privaten Notrufdiensten. Es kann vorteilhaft sein, dass bei einem eingehenden TPS-eCall der automatische eCall in einem Fahrzeug durch den TPS ausgelöst werden kann. Die Reaktionsmöglichkeit der TPS auf einen eCall ist eventuell nicht immer gewährleistet. Daher kann es bevorzugt sein, dass der TPS bei Eingehen eines TPS-eCalls die Möglichkeit hat, den automatischen eCall im Fahrzeug auszulösen, um bevorzugt sicherzustellen, dass der Notruf zum öffentlichen Notrufsystem gelangt.

In einer weiteren bevorzugten Ausführungsform betrifft die Erfindung ein Verfahren, bei dem
a) eine Videoverbindung (20b) zum Notrufenden bereitgestellt wird,
b) hör- und/oder sprachgeschädigte Menschen (17) einen Notruf mit dem Datensatz (20a) und gleichzeig eine Videoverbindung (20b) zum Gebärdendolmetscher (13) auslösen und der Leitstellen-Disponent (10) mit dem Gebärdendolmetscher (13) kommuniziert,
c) und/oder hör- und/oder sprachgeschädigte Menschen (17) einen Notruf mit dem Datensatz (20a) auslösen, wobei die Kommunikation mit der Leitstelle gleichzeitig durch eine Videoübertragung (20b) mit Avatar(en) und/oder Hologramm(en) erfolgt, die die länderspezifische Gebärdensprache berücksichtigt.

In einem Aspekt betrifft die Erfindung also ein Verfahren, bei dem eine Videoverbindung zum Notrufenden hergestellt wird. Dadurch kann gewährleistet werden, dass hör- und/oder sprachgeschädigte Menschen beim Auslösen eines Notrufs sowohl einen Datensatz absenden als auch eine Videoverbindung zu einem Gebärdendolmetscher und/oder dem Leistellen-Disponenten auslösen. Somit kann dann der Gebärdendolmetscher die Kommunikation zwischen Notrufendem und Disponenten unterstützen. Die Kommunikation kann dabei auch durch eine Videoübertragung mit Avatar(en) und/oder Hologramm(en) erfolgen, die die landesspezifische Gebärdensprache berücksichtigen und/oder durch KI generiert bzw. gesteuert werden.

Eine gleichzeitige Videokommunikation mit zugeschalteten Gebärdendolmetschern und Leitstelle kann bevorzugt sein, damit Leitstellen-Disponent und der hör- und/oder sprachgeschädigte Mensch mithilfe des Gebärdendolmetschers in der Lage sein können, miteinander zu kommunizieren.

Es kann bevorzugt sein, dass die Kommunikation mit der Leitstelle mithilfe einer Videoübertragung mit Avatar(en) oder Hologramm(en) erfolgt, die die länderspezifische Gebärdensprache berücksichtigen. Dies kann zum Beispiel vorteilhaft sein, um eine durch Gebärdendolmetscher unterstützte Kommunikation zwischen Nutzer und Leitstelle auch dann zu ermöglichen, wenn kein menschlicher Gebärdendolmetscher zur Verfügung steht, wenn kein menschlicher Gebärdendolmetscher zur Verfügung steht, der dieselbe Gebärdensprache versteht und dolmetschen kann, die der Nutzer versteht, und/oder wenn es einen einheitlichen Gebärdendolmetscher geben soll, der als Gesprächspartner dient

In einer weiteren bevorzugten Ausführungsform betrifft die Erfindung ein Verfahren, bei dem ein "Stiller Notruf" vorzugsweise über eine an die Entität, wie zum Beispiel Smartphone (16,17), PC/Laptop (15), Smartspeaker/persönliche Assistenz (21) oder Alarmanlage, angeschlossene Fernauslösung abgesetzt werden kann, wobei die Umgebungsgeräusche (20d) und/oder Video (20b) zur Leitstelle (10) übertragen werden können.

Bei einem stillen Notruf handelt es sich bevorzugt um einen Notruf, den man unbemerkt und/oder nahezu unbemerkt mittels verschiedener stationärer und/oder mobiler Entitäten absetzen kann. Dies kann in verschiedenen Situationen vorteilhaft sein. Beispielhaft seien genannt: Überfälle, Gewalt, Bedrohungssituationen, und/oder andere. Es kann vorteilhaft sein, wenn bei einem stillen Notruf trotz möglicherweise nicht stattfindender Kommunikation (über Sprache und/oder Chat) so viele Informationen wie möglich an die Leitstelle übertragen werden können. Deswegen kann es vorteilhaft sein, Umgebungsgeräusche und/oder Video zur Leitstelle zu übertragen.

In einer weiteren bevorzugten Ausführungsform betrifft die Erfindung ein Verfahren, bei dem bei Notrufen von außerhalb eines Leitstellenbereichs und/oder aus dem Ausland, vorzugsweise für dritte Personen und/oder für Standorte (zum Beispiel Grundstücke oder Gebäude), die Ermittlung der zuständigen Leitstelle (10) des Nothilfestandortes zum Beispiel mittels Karten-/Adressensuchfunktion und/oder vorab gespeichertem Standort erfolgt.

Es kann bevorzugt sein, dass Notrufe von außerhalb eines Leitstellenbereichs abgesetzt werden, und dass die zuständige Leitstelle des Nothilfestandortes dann mittels Karten-/Adressensuchfunktion oder vorab gespeicherten Standortes erfolgt. Dies kann zum Beispiel vorteilhaft sein, wenn eine dritte Person für jemand anderen einen Notruf absetzt, der sich an einem anderen Standort befindet. In einem solchen Fall wäre es nicht zielführend, den geographischen Ort des Anrufers zu verwenden, sondern es ist notwendig den geographischen Standort des Notfalls zu verwenden. Als eine von vielen möglichen beispielhaften Situationen sei genannt, dass während eines Telefongesprächs ein Notfall bei einem der Gesprächspartner auftritt, der infolgedessen nicht mehr selbst in der Lage ist, einen Notruf abzusetzen. In so einer Situation kann es vorteilhaft sein, wenn der Gesprächspartner den Notruf für die andere Person absetzen kann. Es kann auch bevorzugt sein, dass ein Notruf für einen Standort, wie ein Grundstück, oder ein Gebäude abgesetzt wird. Wenn beispielweise mit einer privaten Alarmanlage und/oder mittels eines Kamerasystems ein Einbruch festgestellt wird, kann es vorteilhaft sein, einen Notruf an die Leitstelle der Polizei mit dem geografischen Ort des Einbruchs abzusetzen.

In einer weiteren bevorzugten Ausführungsform betrifft die Erfindung ein Verfahren, bei dem
a) bei einem Notruf mit Unterstützungsbedarf zum Beispiel über App oder Telefon (15, 16, 17, 18, 19, 21) eine Verbindung zum Third Party Service (TPS) (14) hergestellt wird und über Sprache (20d), Video (20b) und/oder Chat (20c) mit dem Notrufenden und/oder der Leitstelle (10) kommuniziert wird und/oder ein Notruf-Datensatz (20a) an den Server (11,12) übermittelt wird,
b) anhand von Positionsdaten und gegebenenfalls Art des Notfalls zum Beispiel mittels geografisch basierten Routings die zuständige Leitstelle (10) ermittelt und eine Verbindung über die Ortsrufnummer und/oder SIP-Adresse ausgelöst wird,
c) zwischen einem Third Party Service (TPS) (14), dem Notrufenden und der Leitstelle (10) eine gemeinsame Konferenzschaltung herstellt werden kann,
d) der, optional vom Drittanbieter Service (TPS) (14) aktualisierte, Datensatz (20a) bzw. der vom Drittanbieter Service (TPS) (14) eigenständig erstellte Datensatz (20a) an den Server (11,12), vorzugweise an einen AML-Endpunkt (12), übertragen und von der Leitstelle (10) abgerufen und in ein Einsatzleitsystem (10b) übernommen wird,
e) alternativ der Datensatz (20a) mit integrierter Rufnummer des TPS (14) abgesandt wird und der Leitstellen-Disponent einen Rückruf auslöst,
f) Leitstellensysteme bzw. Kommunikationsanlagen der Leitstelle (10) mit NG112-Funktionalität einen NG112-konformen Anruf erhalten können,
g) der TPS (14) sich optional per Fernwartungstool auf die Entität (15, 16, 17, 18, 19, 21) des Notrufenden aufschaltet, eine Telefonkonferenz mit der 112 herstellt und der Datensatz (20a) mit integrierter (Entität-) Rufnummer an den Server (11,12), vorzugweise an einen AML-Server (12), übertragen wird und der TPS (14) mit dem Leitstellen-Disponenten per Sprache (20d) kommuniziert.

In einem Aspekt betrifft die Erfindung also die Situation, dass bei einem Notruf mit Unterstützungsbedarf eine Verbindung zum Third-Party-Service hergestellt wird. Der Third-Party-Service kommuniziert mit dem Notrufenden und der Leitstelle bedarfsgerecht über Sprache, Video, und/oder Chat. Es kann eine Konferenzschaltung zwischen Notrufendem, TPS und Leitstelle hergestellt werden. Mit dem Notruf kann ein Datensatz an den Server übermittelt werden. Anhand der ermittelten Position und ggf. Art des Notfalls, wird eine Verbindung zur zuständigen Leitstelle über die Ortsrufnummer und/oder SIP-Adresse hergestellt. Der TPS kann die Möglichkeit haben, den Datensatz des Notrufenden zu aktualisieren, und/oder eigenständig einen Datensatz zu erstellen. Dieser Datensatz wird an das erfindungsgemäße Serversystem und/oder vorzugsweise an einen AML-Endpunkt übertragen, und kann von dort von der Leistelle abgerufen und in das Einsatzleitsystem übernommen werden. Alternativ kann ein Datensatz, mit integrierter Rufnummer des TPS abgesendet werden, woraufhin der Leitstellen-Disponent einen Rückruf auslösen kann. Wenn die Leitstellensysteme, bzw. Kommunikationsanalagen der Leitstelle die entsprechende NG112-Funktionalität aufweisen, können sie NG112-konforme Anrufe erhalten. Optional kann sich der TPS per Fernwartungstool auf das Gerät des Notrufenden aufschalten und eine Telekonferenz mit der 112 herstellen, der Datensatz inklusive Rufnummer der Entität des Notrufenden wird an den Server, vorzugsweise den AML-Server übertragen, und der TPS kann mit dem Disponenten per Sprache kommunizieren.

AML steht bevorzugt für Advanced Mobility Location und bezeichnet einen quelloffenen Dienst zur Positionsbestimmung von Anrufern bei Nutzung einer Notrufnummer. Bevorzugt bedeutet dies, dass wenn ein Anrufer eine AML-taugliche Notrufnummer wählt, wird die Position des Anrufers ermittelt, und diese Daten werden automatisch an einen AML-Server übermittelt, von dem die Leitstelle die Daten bevorzugt abrufen kann. Dies ist vorteilhaft, da eine große Zahl der Notrufe über Mobiltelefone abgesetzt werden, wobei es vorkommen kann, dass die Nutzer des Mobiltelefons oft keine genauen Angaben zu ihrem Standort machen können. Liegen der Leitstelle auch in solchen Fällen automatisch übermittelte Positionsdaten vor, so kann hierdurch vorteilhafterweise die Hilfe schneller und gezielter erfolgen.

Geographisch basiertes Routing bezeichnet die Ermittlung des Ziels (hier z.B. die zuständige Rettungsleitstelle) anhand der geografischen Position und des zugrundeliegenden Zuständigkeits-Polygons. Im Gegensatz zum Rufnummern-, also Telefonnetz, -basierten Routing, welches die Bereiche der Ortsnetz-Kennzahlen zugrunde legt, ist das geographisch basierte Routing genauer und weniger anfällig für Fehler, gerade in Grenzbereichen. Im speziellen kann ein Notrufender in einem benachbarten Telefonnetz-Bereich eingebucht sein, obwohl er sich geografisch in einem anderen Zuständigkeitsbereich befindet. Da die Zuständigkeitsbereiche der Leitstellen anhand der Landkreise festgelegt sind, ist die Ermittlung anhand der geografischen Daten vorteilhaft.

In einer weiteren bevorzugten Ausführungsform betrifft die Erfindung ein Verfahren, bei dem
a) ein Drittanbieter Service (TPS) (14) bei einem in Bearbeitung befindlichen Vorgang, welcher nicht als Notruf eingegangen ist, bei Bedarf die Notwendigkeit eines Notrufs aktivieren kann und dadurch ein Notruf durch das Serversystem (11) ausgelöst wird,
b) ein Serversystem (11) die Ortsrufnummer bzw. SIP-Adresse der zuständigen Leitstelle wählt und mit der Kommunikation des TPS (14) zusammenschaltet,
c) der Datensatz (20a) vorzugsweise an einen AML-Server (12) gesendet wird.

In einem Aspekt betrifft die Erfindung also ein Verfahren, bei dem durch einen Nutzer eine Verbindung zu einem TPS hergestellt wird, die ursprünglich nicht als Notfall galt. Der TPS kann in so einem Fall die Möglichkeit haben, bei Bedarf die Notwendigkeit eines Notrufs zu aktivieren, wenn sich zum Beispiel im Laufe des Gesprächs herausstellt, dass diese Notwendigkeit doch besteht. Hierdurch wird dann ein entsprechender Notruf durch das Serversystem ausgelöst. Infolgedessen kann das Serversystem die Ortsrufnummer, bzw. SIP-Adresse der zuständigen Leitstelle wählen, und diese mit der Kommunikation des TPS zusammenschalten. Der Datensatz des Notrufenden wird dann auch an einen AML-Server gesendet.

In einer weiteren bevorzugten Ausführungsform betrifft die Erfindung ein Verfahren, bei dem
a) ein Notruf ohne zusätzlichen Unterstützungsbedarf vorzugsweise mit einer App (16) und/oder PC/Laptop (15) und/oder Smartspeaker/persönliche Assistenz (21), durch Anruf der 112 und/oder weiterer landestypischer Notrufdienste ausgelöst wird und ein Notruf-Datensatz (20a) an den zuständigen Server (11, 12) übermittelt wird,
b) die Nutzer mittels App eine Sprach-Notrufverbindung (20d) an die zuständige Leitstelle (10) herstellen und der Datensatz (20a), optional auch für eine ausgewählte andere Person, an den Server (11, 12) übermitteln,
c) von der Leitstelle (10) ein Sprach-Notruf (20d) angenommen wird und der Notruf-Datensatz (20a) durch die Leitstelle (10) vom Server (11,12) mittels der Rufnummer des Notrufenden manuell oder automatisch abgerufen und in das Einsatzleitsystem (ELS) (10b) übernommen wird.

In einem Aspekt betrifft die Erfindung also einen Fall, in dem ein Notruf ohne zusätzlichen Unterstützungsbedarf mittels App/Anwendung, Wahl der 112, und/oder weiterer landestypischer Notrufdienste ausgelöst wird, und ein entsprechender Datensatz an den zuständigen Server übermittelt wird. Durch Auslösen des Notrufs mittels der App/Anwendung wird eine Sprachverbindung zwischen Nutzer und zuständiger Leitstelle hergestellt und der Datensatz wird an den Server übermittelt. Hierbei kann auch ein Datensatz von einer ausgewählten anderen Person an den Server übermittelt werden. Dies kann zum Beispiel vorteilhaft sein, wenn ein Nutzer den Notruf für eine andere Person absetzt. Von der zuständigen Leitstelle wird der Sprach-Notruf angenommen und der Datensatz durch die Leitstelle vom Server mittels der Rufnummer des Notrufenden manuell oder automatisch abgerufen und in das Einsatzleitsystem übernommen.

In einer weiteren bevorzugten Ausführungsform betrifft die Erfindung ein Verfahren, bei dem mehrere Leitstellen (10) untereinander vorzugsweise per Video- (20b), Sprach- (20d), Chat- (20c) und/oder Datenkommunikation (20a) zusammenarbeiten und optional Notrufe weiterleiten oder gemeinsam bearbeiten können.

In einem Aspekt betrifft die Erfindung also einen Fall, in dem mehrere Leitstellen untereinander zusammenarbeiten und optional Notrufe weiterleiten oder gemeinsam bearbeiten können. Hierzu können die Leitstellen untereinander per Video-, Sprach-, Chat-, und/oder Datenkommunikation zusammenarbeiten. Dies kann vorteilhaft sein, um flexibel auf das Notrufaufkommen, die Art der Notfälle, und/oder andere Bedingungen reagieren zu können.

In einer weiteren bevorzugten Ausführungsform betrifft die Erfindung ein Verfahren, bei dem
a) bei Nichtannahme eines Notrufs und/oder Nichtzustandekommens einer Notrufverbindung über das Telefonnetz, der Notruf via Datenübertragung zu der Leitstelle (10) geleitet und/oder eine Alternativverbindung zur Kommunikation hergestellt wird,
b) bei fehlendem Mobilfunknetz die Verbindung zu verfügbaren Hotspots hergestellt wird.

In einem Aspekt betrifft die Erfindung also einen Fall, bei dem ein abgesetzter Notruf nicht angenommen wird, und/oder eine Notrufverbindung über das Telefonnetz (Mobilfunk und/oder Festnetz) nicht zustande kommt. In einem solchen Fall kann der Notruf via Datenübertragung zu der Leitstelle geleitet werden, und/oder eine Alternativverbindung kann hergestellt werden. Falls ein Mobilfunknetz nicht verfügbar ist, kann eine Verbindung zu verfügbaren Hotspots hergestellt werden.

Bei einem Hotspot kann es sich bevorzugt um Einrichtungen und/oder Technologien handeln, die den mobilen Zugang zum Internet ermöglichen, selbst wenn kein herkömmliches Mobilfunknetz verfügbar ist. Vorzugsweise kommt hierbei WLAN zum Einsatz, wobei auch darüber eine Datenverbindung und/oder Telefonverbindung (Voice over WLAN) aufgebaut werden kann. Die Verbindung von Hotspot und Internet kann beispielhaft ermöglicht werden über: Datenfestverkabelung, Satellitenkommunikation, Funktechnologie, Mesh-Netzwerke, und/oder andere. Die Verbindung zu verfügbaren Hotspots bei fehlendem Mobilfunknetz kann vorteilhaft sein, insbesondere für die Sicherheit in entlegenen oder schlecht abgedeckten Gebieten und/oder bei Ausfall von Mobilfunkmasten.

In einer weiteren bevorzugten Ausführungsform betrifft die Erfindung ein Verfahren, bei dem Datensätze (20a) bestimmter Kategorien mit einer Entität einer autorisierten Person abrufbar sind, wenn das Ereignis im Bereich ihres aktuellen Standortes und/oder ihrer Zuständigkeit liegt.

In einem Aspekt betrifft die Erfindung also einen Fall, bei dem Datensätze zu Notrufen mit bestimmten Kategorien von Entitäten autorisierter Personen von zum Beispiel Einsatzkräften abgerufen werden können, wenn das Ereignis im Bereich ihres aktuellen Standortes und/oder ihrer Zuständigkeit liegt.

Dies kann bevorzugt sein, wenn zum Beispiel eine Polizeistreife gerade in einem Gebiet unterwegs ist, aus dem ein Notruf der Kategorie "Überfall" abgesetzt wurde. In einem solchen Fall könnte eine Entität der Polizeistreife den Datensatz abrufen und die Polizeistreife könnte vorteilhafterweise sehr schnell auf den Notruf reagieren. Ein anderes Beispiel wäre ein Notruf der Kategorie "Unfall" könnte von Polizeistreife und/oder Krankenwagen in der Umgebung des Notrufs abgerufen werden, und die Rettungskräfte könnten, wenn sie Kapazitäten haben entsprechend schnell reagieren. Es sind viele ähnliche Konstellationen denkbar, in denen es vorteilhaft sein kann, wenn autorisierte Nutzer mit einer Entität Datensätze bestimmter Kategorien im Bereich ihres aktuellen Standortes und/oder ihrer Zuständigkeit abrufen könnten.

In einer weiteren bevorzugten Ausführungsform betrifft die Erfindung ein Verfahren, bei dem
a) ein ärztlicher Bereitschaftsdienst (14), vorzugsweise in die Leitstelle (10, 10a, 10b) integriert wird,
b) Notrufe, die von der Leitstelle (10) als nicht dringend eingestuft werden, über eine Datenverbindung und/oder Ortsrufnummer und/oder SIP-Adresse an den ärztlichen Bereitschaftsdienst (14) mit dem bereits erfassten Datensatz (20a) übermittelt werden.

In einem Aspekt betrifft die Erfindung also ein Verfahren, bei dem ein ärztlicher Bereitschaftsdienst vorzugsweise in die Leistelle integriert wird. Wenn Notrufe bei der Leitstelle eingehen, die von der Leitstelle im Verlauf als nicht dringend eingestuft werden, können diese inklusive des bereits erfassten Datensatzes über eine Datenverbindung und/oder Ortsrufnummer und/oder SIP-Adresse an den Ärztlichen Bereitschaftsdienst übermittelt werden. Dies kann zum Beispiel vorteilhaft sein, um die vorhandenen Kapazitäten optimal ausnutzen zu können, indem zum Beispiel weniger dringende Fälle ebenfalls Hilfe erhalten können, ohne die Kapazitäten der Notfall-Einsatzkräfte zu belasten.

In einer weiteren bevorzugten Ausführungsform betrifft die Erfindung ein Verfahren, bei dem
a) durch eine automatische Auswertung von Bestandteilen der übermittelten Datensätze (20a), wie zum Beispiel Gesundheits-/Vitaldaten und/oder Schadstoffdaten oder Daten von anderen Sensoren, Notfallsituationen und/oder Katastrophen erkannt und die Einsatzkräfte, wie zum Beispiel Rettungsdienst, Feuerwehr, und/oder andere darüber vorab und/oder direkt alarmiert werden, wobei zusätzliche Informationen, per Daten (20a), Sprache (20d), Video (20b) und/oder Bilder (20a), übermittelt werden können, und/oder
b) bevorzugt beim Auslösen eines Notrufs über eine App (16,17) zur Legitimierung der übermittelten geografischen Position, eine aktuell genutzte Mobilfunkzelle und/oder andere standortspezifische Merkmale übermittelt und/oder überprüft werden.

In einem Aspekt betrifft die Erfindung also den Fall, dass die übermittelten Daten automatisch ausgewertet werden, sodass Einsatzkräfte vor und/oder während ihres Einsatzes bereits über zum Beispiel automatisch ausgewertete Inhalte von Datensätzen informiert werden können. Es können außerdem zusätzliche Informationen über Sprache, Video, Bilder und/oder andere übermittelt werden. Dies kann vorteilhaft sein, da sich die Einsatzkräfte somit schon im Vorfeld einen Eindruck von Ort, Bedingungen, Art des Einsatzes und/oder anderes machen können, und gegebenenfalls bereits im Vorfeld genauere Informationen zur Planung des Einsatzes haben können. Weiterhin kann es vorteilhaft sein, wenn durch automatische bereichsübergreifende Auswertung der Sensordaten von Notrufen größere Katastrophen erkannt und/oder vorhergesagt werden können und somit die Vorbereitung auf diese Situationen effizienter und zielgerichteter wird. Die übermittelte geographische Position kann hierbei zum Beispiel über eine aktuell genutzte Mobilfunkzelle und/oder andere standortspezifische Merkmale legitimiert und/oder überprüft werden, um bevorzugt eine manipulierte geografische Position auszuschließen.

Es kann vorteilhaft sein, wenn Einsatzkräfte vor ihrem Einsatz, oder direkt am Einsatzort über den Inhalt von Datensätzen informiert werden. Dies kann aus vielen Gründen vorteilhaft sein. Zum einen können geeignete Maßnahmen geplant und/oder ergriffen werden, um auf die spezifische Notfallsituation reagieren zu können, und/oder es können bei Bedarf geeignete Maßnahmen zum Selbstschutz der Einsatzkräfte geplant und/oder ergriffen werden.

Es kann vorteilhaft sein, wenn bevorzugt beim Auslösen eines Notrufs über eine App auf einem mobilen Gerät zur Legitimierung der übermittelten geografischen Position, eine aktuell genutzte Mobilfunkzelle und/oder andere standortspezifische Merkmale übermittelt und/oder überprüft werden, um zumindest die Nähe zur übermittelten geografischen Position zu bestätigen und bevorzugt eine manipulierte geografische Position weitestgehend auszuschließen. Vorteilhafterweise reduziert dies die Anzahl der Fake-Notrufe sowie des "Swattings" (Notfall an einem Standort vortäuschen und z.B. Rettungskräfte und/oder Polizei zu den nichts ahnenden Opfern schicken).

In einer weiteren bevorzugten Ausführungsform betrifft die Erfindung ein Verfahren, bei dem
a) Daten über eine Notsituation per Code- und/oder Datenübertragung an den Rettungsdienst und von diesem an die medizinische Einrichtung übermittelt werden,
b) die Übertragungen in das Einsatzleitsystem (10b), zum Rettungsdienst und/oder zur medizinischen Einrichtung per Datentransfer, optisch und/oder akustisch stattfinden kann.

In einem Aspekt betrifft die Erfindung also ein Verfahren, bei dem die Daten über eine Notsituation per Code und/oder Datenübertragung an den Rettungsdienst, und von diesem an die medizinische Einrichtung übermittelt werden. Dies kann vorteilhaft sein, um die Effizienz und Reaktionsgeschwindigkeit zu erhöhen. Die Übertragung in das Einsatzleitsystem, zum Rettungsdienst und/oder zur medizinischen Einrichtung kann dabei per Datentransfer, optisch und/oder akustisch erfolgen.

Die Daten über eine Notsituation können je nach Situation und Ermittlung der Daten bevorzugt verschiedene Daten umfassen. Es kann sich um Daten betreffend den Schweregrad eines Unfalls, austretende Schadstoffe, Anzahl beteiligter Personen Notfallkategorie, persönliche Daten des Notrufenden, wie Allergien, Vorerkrankungen, Alter und/oder anderes handeln.

Der Fachmann erkennt, dass bevorzugte Merkmale und Vorteile des erfindungsgemäßen Verfahrens auch für das erfindungsgemäße System und umgekehrt gelten.

### Figuren

Im Folgenden soll die Erfindung näher erläutert werden, ohne auf diese beschränkt zu sein.

### Kurzbeschreibung der Abbildung

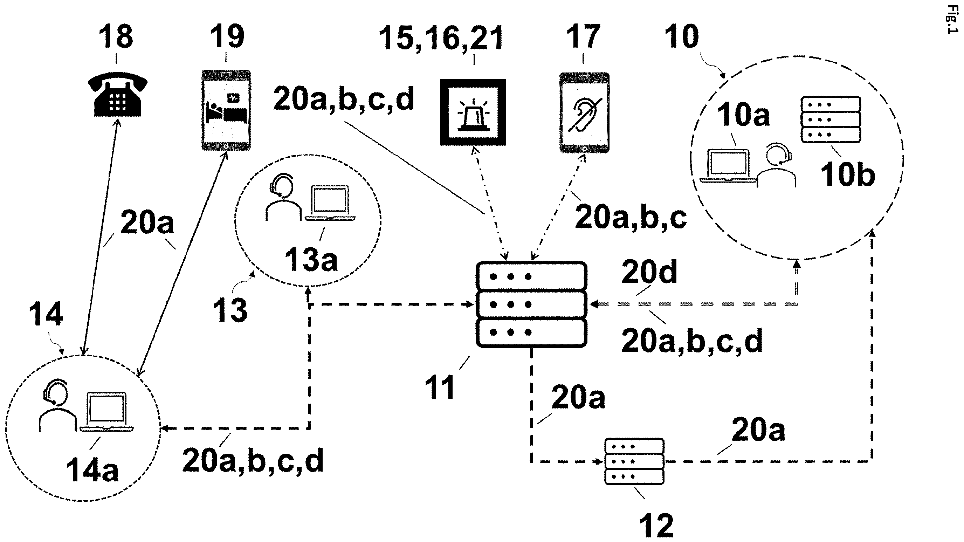

- **Fig.1**: Schematische Darstellung einer bevorzugten Ausführungsform des erfindungsgemäßen Systems barrierefreier länderübergreifender Notruf

### Detaillierte Beschreibung der Abbildung

Fig.1 illustriert eine bevorzugte Ausführungsform des erfindungsgemäßen Systems zum Senden und Empfang von barrierefreien Notrufen zu Leitstellen, welches geeignet ist, um ein erfindungsgemäßes Verfahren auszuführen. Hierbei weist die Leitstelle 10 die Entität Webinterface-Leitstelle 10a auf. Die Entität Webinterface-Leitstelle 10a ist dazu eingerichtet die Datensätze 20a zu empfangen bzw. diese abzurufen, zu verarbeiten und die Kommunikation via Video 20b, Chat 20c und Sprache 20d bereitzustellen. Die Entität Einsatzleitsystem 10b ist dazu eingerichtet, die über das Webinterface 10a übermittelten Datensätze strukturgerecht zu übernehmen. Die Entitäten der Nutzer, Smartphone-Gehörlos, App 17 für gehörlose Nutzer ermöglichen die Datenkommunikation 20a, Videokommunikation 20b mit Gebärdendolmetscher 13, und/oder Kommunikation per Chat 20c. Die Entitäten Smartphone, App 16 für Nutzer ohne Behinderung ermöglichen die Kommunikation per Sprache 20d, Chat 20c, Video 20b und/oder Daten 20a, wobei es sich um die gleiche App mit anderer Konfiguration handeln kann. Die Entitäten der Nutzer PC/Laptop 15, sowie Smartspeaker/persönliche Assistenz 21 ermöglichen die Kommunikation per Daten 20a, Video, 20b, Chat 20c und/oder Sprache 20d. Anrufe über Telefon und Notfall-Apps, wie 116117 des Ärztlichen Bereitschaftsdiensts 18 oder Hausnotrufdienste 19 werden vom jeweiligen Drittanbieter Service (TPS) 14 entgegengenommen und per Sprache 20a kommuniziert. Die jeweils übermittelten Daten werden automatisch bzw. manuell mit ergänzenden Informationen in ein Anwenderprogramm übernommen. Der aktualisierte Notruf-Datensatz 20a wird mit den Positionsdaten des Notrufstandortes an das zuständigen Serversystem 11 übermittelt. Im Serversystem 11 wird anhand der Positionsdaten des Notrufstandortes und der Kategorie des Notfalls die zuständige Leitstelle 10 ermittelt. Optional sendet das Serversystem 11 den Datensatz 20a an den AML-Server 12. Mit der Ortsrufnummer bzw. SIP-Adresse wird vom Kommunikationssystem im Serversystem 11 die Kommunikation zwischen Drittanbieter Service (TPS) 14 und Leitstelle 10 hergestellt und per Sprache 20d kommuniziert.

Der Anrufer (TPS) 14 teilt dem Disponenten (Leitstelle) 10 mit, dass ein App-Notruf vorliegt. Daraufhin öffnet der Disponent das Webinterface 10a und ruft den zugordneten Datensatz 20a vom Serversystem 11 ab, der im Webinterface 10a zur weiteren Bearbeitung angezeigt wird.

Optional oder alternativ wird der Datensatz 20a durch das Einsatzleitsystem 10b vom AML-Server 12 abgerufen und zur weiteren Bearbeitung angezeigt.

### Bezugszeichenliste

- 10: Leitstellen
- 10a: Webinterface-Leitstelle
- 10b: Einsatzleitsystem
- 11: Serversystem
- 12: AML-Server
- 13: Gebärdendolmetscher
- 13a: Webinterface-Gebärdendolmetscher
- 14: Drittanbieter Service (TPS)
- 14a: Webinterface-TPS / TPS-Anwendung
- 15: PC/Laptop
- 16: Smartphone, App
- 17: Smartphone-Gehörlos, App
- 18: Telefon, App - 116117
- 19: Telefon, App - Hausnotruf
- 20a: Datensatz
- 20b: Video
- 20c: Chat
- 20d: Sprache
- 21: Smartspeaker/Persönliche Assistenz

## Patentansprüche

1. Verfahren zum barrierefreien Notruf umfassend folgende Schritte:
a) Auslösen eines Notrufes ausgehend von einer Entität (15, 16, 17, 18, 19, 21) eines Nutzers,
b) Speicherung von personenbezogenen Daten in einer App (15, 16, 17, 18, 19, 21) und/oder einem Datenspeicher der Entität (15, 16, 17, 18, 19, 21) und/oder auf einem Serversystem (11),
c) bedarfsabhängige Einbindung (insbesondere via Schnittstelle und/oder angepasste Client-App/-Anwendung) von Services und/oder Unterstützung in den Notruf,
d) Übertragung von mindestens einem Datensatz (20a) ausgehend von der Entität (15, 16, 17, 18, 19, 21) des Nutzers an eine zuständige Leitstelle (10) und/oder Callcenter Third-Party-Services (TPS) (14), wobei der mindestens eine Datensatz (20a) geographische Daten, Kommunikationsdaten, personenbezogene Daten, Vitaldaten und/oder Statusdaten umfasst.

2. Verfahren nach dem vorherigen Anspruch
**dadurch gekennzeichnet, dass**
das Verfahren länderübergreifend ist.

3. Verfahren nach einem oder mehreren der vorherigen Ansprüche
**dadurch gekennzeichnet, dass**
die Entität der Nutzer, Smartphone (16, 17), PC/Laptop (15) und/oder Smartspeaker/persönliche Assistenz (21), bevorzugt eine installierte App, eine Webanwendung, eine integrierte Anwendung mit einem zugeordneten Menü, einen Schalter, Sprach-/Geräusch-/Gestenerkennung und/oder Sensordaten zur Auslösung eines Notrufs sowie vorzugsweise ein Kommunikationsmodul und/oder ein Navigationsmodul umfasst.

4. Verfahren nach einem oder mehreren der vorherigen Ansprüche
**dadurch gekennzeichnet, dass**
die Schnittstelle und/oder angepasste Client-App/-Anwendung zur Einbindung von Notarzt, Telearzt und/oder Gebärdendolmetscher dient, wobei bevorzugt der Gebärdendolmetscher ein Mensch oder ein Avatar/Hologramm zur Gebärdendolmetschung sein kann.

5. Verfahren nach einem oder mehreren der vorherigen Ansprüche
**dadurch gekennzeichnet, dass**
die Leitstelle (10) anhand der aktuellen geografischen Position der Entität (15, 16, 17, 18, 19, 21) des Nutzers unter Berücksichtigung der geringsten räumlichen oder zeitlichen Distanz, auch zur nächstgelegenen zugehörigen Rettungswache, ermittelt wird und optional die Verkehrssituation berücksichtigt wird, und/oder der Rettungsdienst, auch im Einsatz befindliche Fahrzeuge, direkt gerufen wird und/oder der durch verschiedene Faktoren ermittelte optimale Rettungsweg genutzt wird.

6. Verfahren nach einem oder mehreren der vorherigen Ansprüche
**dadurch gekennzeichnet, dass**
a) Datensätze geografischer Bereiche, bevorzugt in Form von Polygonen der Zuständigkeitsbereiche, und/oder Datensätze mit den digitalen Adressen, den Zuständigkeitsbereichen sowie optional den Versionen der Einsatzleitsysteme der Leitstellen (10) von zum Beispiel Polizei, Feuerwehr/Rettungsdienst und anderen genutzt werden,
b) anhand der aktuellen geografischen Position, und gegebenenfalls Art des Notfalls, das optimale Notrufverfahren und -ziel, wie zum Beispiel Inland Notrufverfahren, NG112 Inland/Ausland und/oder andere, ermittelt und zugeordnet werden,
c) beim Auslösen eines Notrufs, 112 und/oder weiterer landestypischer Notrufdienste ein Notruf-Datensatz (20a) an den zuständigen Server (11, 12) übermittelt wird,
d) von insbesondere beweglichen/ortsveränderlichen Entitäten (15, 16, 17, 18, 19, 21) die aktuelle geografische Position und/oder andere sich verändernde Status- und/oder Vitaldaten und/oder andere einmalig und/oder kontinuierlich/periodisch übermittelt werden,
e) die länderübergreifende Kommunikation mit serverseitigen Übersetzungen für Sprache, Chat, Text-to-Speech und/oder Speech-to-Text erfolgt,
f) alternativ zu b) ein Notruf mit der aktuellen geografischen Position an alle Leitstellen (10) übermittelt wird und anhand der Positionsdaten die Zuständigkeit in der Leitstelle (10) bzw. deren aktuell zuständige Ersatzleitstelle (10) ermittelt wird.

7. Verfahren nach einem oder mehreren der vorherigen Ansprüche
**dadurch gekennzeichnet, dass**
a) eine Übernahme des Datensatzes (20a) mit personenbezogenen Daten und/oder Statusdaten in ein Einsatzleitsystem der Leitstelle (10b) durch eine Schaltfläche und/oder eine Funktion eines Webinterfaces (10a) und/oder durch Sprachsteuerung und/oder Gestensteuerung erfolgt und vorab festgelegte Datenblöcke strukturiert und Schadcoderesistent in die Eingabemaske des Einsatzleitsystems (10b) eingetragen werden,
b) zur Schadcode-resistenten Datenübertragung zwischen Webinterface (10a) und Einsatzleitsystem (10b) digitale, akustische, und/oder optische Übertragungsverfahren eingesetzt werden,
c) bei einer optischen Übertragung aus den für das Einsatzleitsystem (10b) relevanten Daten ein (oder mehrere) maschinenlesbarer Code, Lichtfolge und/oder Grafik, vorzugsweise ein QR-Code, generiert und im Webinterface (10a) angezeigt wird,
d) der im Webinterface (10a) angezeigte QR-Code (und/oder maschinenlesbare Code, Lichtfolge und/oder Grafik) mit einem QR-Code-Scanner und/oder einer Kamera ausgelesen wird und der QR-Code-Scanner und/oder die Kamera zur Datenübertragung vorzugsweise über USB mit dem PC des Disponenten verbunden ist und die Datenblöcke in die Eingabemaske des Einsatzleitsystems (10b) eingetragen werden.

8. Verfahren nach einem oder mehreren der vorherigen Ansprüche
**dadurch gekennzeichnet, dass**
a) übermittelte Datensätze (20a) und/oder eine Kommunikation vorzugsweise von in der Leitstelle (10) befindlichen und/oder angebundenen Servern empfangen und/oder realisiert wird,
b) alternativ eine Telefonanlage/PBX und/oder eine Kommunikationseinrichtung der Leitstelle (10) genutzt werden kann.

9. Verfahren nach einem oder mehreren der vorherigen Ansprüche
**dadurch gekennzeichnet, dass**
a) Funktionalitäten von Apps und/oder Anwendungen vollständig oder differenziert in Betriebssysteme der Entitäten integriert sind,
b) optional proprietäre Apps über den oder die Server integriert sind.

10. Verfahren nach einem oder mehreren der vorhergehenden Ansprüche,
**dadurch gekennzeichnet, dass**
a) eine Übernahme des Datensatzes (20a) mit Statusdaten und/oder personenbezogenen Daten in das Einsatzleitsystem der Leitstelle (10b) über die Schnittstelle zum eCall System (z.B. Router, Decoder) erfolgt,
b) und/oder bei einem im Callcenter Third-Party-Services (TPS) (14) eingehendem TPS-eCall, durch Auslösen eines ReCall der automatische eCall in einem Fahrzeug ausgelöst wird.

11. Verfahren nach einem oder mehreren der vorherigen Ansprüche
**dadurch gekennzeichnet, dass**
a) eine Videoverbindung (20b) zum Notrufenden bereitgestellt wird,
b) hör- und/oder sprachgeschädigte Menschen (17) einen Notruf mit dem Datensatz (20a) und gleichzeig eine Videoverbindung (20b) zum Gebärdendolmetscher (13) auslösen und der Leitstellen-Disponent (10) mit dem Gebärdendolmetscher (13) kommuniziert,
c) und/oder hör- und/oder sprachgeschädigte Menschen (17) einen Notruf mit dem Datensatz (20a) auslösen, wobei die Kommunikation mit der Leitstelle gleichzeitig durch eine Videoübertragung (20b) mit Avatar(en) und/oder Hologramm(en) erfolgt, die vorzugsweise die länderspezifische Gebärdensprache berücksichtigt.

12. Verfahren nach einem oder mehreren der vorherigen Ansprüche
**dadurch gekennzeichnet, dass**
ein "Stiller Notruf" vorzugsweise über eine an die Entität, wie zum Beispiel Smartphone (16,17), PC/Laptop (15), Smartspeaker/persönliche Assistenz (21) oder Alarmanlage, angeschlossene Fernauslösung und/oder Sprach-/Gestenerkennung abgesetzt werden kann, wobei die Umgebungsgeräusche (20d) und/oder Video (20b) zur Leitstelle (10) übertragen werden können.

13. Verfahren nach einem oder mehreren der vorherigen Ansprüche,
**dadurch gekennzeichnet, dass**
bei Notrufen von außerhalb eines Leitstellenbereichs und/oder aus dem Ausland, vorzugsweise für dritte Personen und/oder für Standorte (zum Beispiel Grundstücke oder Gebäude), die Ermittlung der zuständigen Leitstelle (10) des Nothilfestandortes zum Beispiel mittels Karten-/Adressensuchfunktion und/oder vorab gespeichertem Standort erfolgt.

14. Verfahren nach einem oder mehreren der vorherigen Ansprüche
**dadurch gekennzeichnet, dass**
a) bei einem Notruf mit Unterstützungsbedarf zum Beispiel über App oder Telefon (15, 16, 17, 18, 19, 21) eine Verbindung zum Third Party Service (TPS) (14) hergestellt wird und über Sprache (20d), Video (20b) und/oder Chat (20c) mit dem Notrufenden und/oder der Leitstelle (10) kommuniziert wird und/oder ein Notruf-Datensatz (20a) an den Server (11,12) übermittelt wird,
b) anhand von Positionsdaten und gegebenenfalls Art des Notfalls zum Beispiel mittels geografisch basierten Routings die zuständige Leitstelle (10) ermittelt und eine Verbindung über die Ortsrufnummer und/oder SIP-Adresse ausgelöst wird,
c) zwischen einem Third Party Service (TPS) (14), dem Notrufenden und der Leitstelle (10) eine gemeinsame Konferenzschaltung herstellt werden kann,
d) der, optional vom Drittanbieter Service (TPS) (14) aktualisierte, Datensatz (20a) bzw. der vom Drittanbieter Service (TPS) (14) eigenständig erstellte Datensatz (20a) an den Server (11,12), vorzugweise an einen AML-Endpunkt (12), übertragen und von der Leitstelle (10) abgerufen und in ein Einsatzleitsystem (10b) übernommen wird,
e) alternativ der Datensatz (20a) mit integrierter Rufnummer des TPS (14) abgesandt wird und der Leitstellen-Disponent einen Rückruf auslöst,
f) Leitstellensysteme bzw. Kommunikationsanlagen der Leitstelle (10) mit NG112-Funktionalität einen NG112-konformen Anruf erhalten können,
g) der TPS (14) sich optional per Fernwartungstool auf die Entität (15, 16, 17, 18, 19, 21) des Notrufenden aufschaltet, eine Telefonkonferenz mit der 112 herstellt und der Datensatz (20a) mit integrierter (Entität-) Rufnummer an den Server (11,12), vorzugweise an einen AML-Server (12), übertragen wird und der TPS (14) mit dem Leitstellen-Disponenten per Sprache (20d) kommuniziert.

15. Verfahren nach einem oder mehreren der vorherigen Ansprüche
**dadurch gekennzeichnet, dass**
a) ein Drittanbieter Service (TPS) (14) bei einem in Bearbeitung befindlichen Vorgang, welcher nicht als Notruf eingegangen ist, bei Bedarf die Notwendigkeit eines Notrufs aktivieren kann und dadurch ein Notruf durch das Serversystem (11) ausgelöst wird,
b) ein Serversystem (11) die Ortsrufnummer bzw. SIP-Adresse der zuständigen Leitstelle wählt und mit der Kommunikation des TPS (14) zusammenschaltet,
c) der Datensatz (20a) vorzugsweise an einen AML-Server (12) gesendet wird.

16. Verfahren nach einem oder mehreren der vorherigen Ansprüche
**dadurch gekennzeichnet, dass**
a) ein Notruf ohne zusätzlichen Unterstützungsbedarf vorzugsweise mit einer App (16), PC/Laptop (15) und/oder Smartspeaker/persönliche Assistenz (21), durch Anruf der 112 und/oder weiterer landestypischer Notrufdienste ausgelöst wird und ein Notruf-Datensatz (20a) an den zuständigen Server (11, 12) übermittelt wird,
b) die Nutzer mittels App eine Sprach-Notrufverbindung (20d) an die zuständige Leitstelle (10) herstellen und der Datensatz (20a), optional auch für eine ausgewählte andere Person, an den Server (11, 12) übermitteln,
c) von der Leitstelle (10) ein Sprach-Notruf (20d) angenommen wird und der Notruf-Datensatz (20a) durch die Leitstelle (10) vom Server (11,12) mittels der Rufnummer oder anderer eindeutiger Identifikationsnummer des Notrufenden manuell oder automatisch abgerufen und in das Einsatzleitsystem (ELS) (10b) übernommen wird.

17. Verfahren nach einem oder mehreren der vorherigen Ansprüche
**dadurch gekennzeichnet, dass**
mehrere Leitstellen (10) untereinander vorzugsweise per Video- (20b), Sprach- (20d), Chat-(20c) und/oder Datenkommunikation (20a) zusammenarbeiten und optional Notrufe weiterleiten oder gemeinsam bearbeiten können.

18. Verfahren nach einem oder mehreren der vorherigen Ansprüche
**dadurch gekennzeichnet, dass**
a) bei Nichtannahme eines Notrufs und/oder Nichtzustandekommens einer Notrufverbindung über das Telefonnetz, der Notruf via Datenübertragung zu der Leitstelle (10) geleitet und/oder eine Alternativverbindung zur Kommunikation hergestellt wird,
b) bei fehlendem Mobilfunknetz die Verbindung zu verfügbaren Hotspots hergestellt wird.

19. Verfahren nach einem oder mehreren der vorherigen Ansprüche,
**dadurch gekennzeichnet, dass**
Datensätze (20a) bestimmter Kategorien mit einer Entität einer autorisierten Person abrufbar sind, wenn das Ereignis im Bereich ihres aktuellen Standortes und/oder ihrer Zuständigkeit liegt.

20. Verfahren nach einem oder mehreren der vorherigen Ansprüche
**dadurch gekennzeichnet, dass**
a) ein ärztlicher Bereitschaftsdienst (14), vorzugsweise in die Leitstelle (10, 10a, 10b) integriert wird,
b) Notrufe, die von der Leitstelle (10) als nicht dringend eingestuft werden, über eine Datenverbindung und/oder Ortsrufnummer und/oder SIP-Adresse an den ärztlichen Bereitschaftsdienst (14) mit dem bereits erfassten Datensatz (20a) übermittelt werden.

21. Verfahren nach einem oder mehreren der vorherigen Ansprüche
**dadurch gekennzeichnet, dass**
a) durch eine automatische Auswertung von Bestandteilen der übermittelten Datensätze (20a), wie zum Beispiel Gesundheits-/Vitaldaten, Schadstoffdaten und/oder Daten von anderen Sensoren, Notfallsituationen und/oder Katastrophen erkannt und die Einsatzkräfte, wie zum Beispiel Rettungsdienst, Feuerwehr, und/oder andere darüber vorab und/oder direkt alarmiert werden, wobei zusätzliche Informationen, per Daten (20a), Sprache (20d), Video (20b) und/oder Bilder (20a), übermittelt werden können,
b) und/oder beim Auslösen eines Notrufs über eine App (16,17) zur Legitimierung der übermittelten geografischen Position, eine aktuell genutzte Mobilfunkzelle und/oder andere standortspezifische Merkmale übermittelt und/oder überprüft werden.

22. Verfahren nach einem oder mehreren der vorherigen Ansprüche
**dadurch gekennzeichnet, dass**
a) Daten über eine Notsituation per Code- und/oder Datenübertragung an den Rettungsdienst und von diesem an die medizinische Einrichtung übermittelt werden,
b) die Übertragungen in das Einsatzleitsystem (10b), zum Rettungsdienst und/oder zur medizinischen Einrichtung per Datentransfer, optisch und/oder akustisch stattfinden kann.

23. System für einen barrierefreien Notruf bevorzugt für die Verwendung eines Verfahrens nach einem oder mehreren der Ansprüche 1- 22 umfassend Entitäten (15, 16, 17, 18, 19, 21) wie zum Beispiel Smartphones, PCs und andere, sowie Server (11) und/oder eine Kommunikationseinrichtung,
**dadurch gekennzeichnet, dass**
a) die Entität (15, 16, 17, 18, 19, 21) der Nutzer, wie zum Beispiel Smartphone, PC/Laptop, Smartspeaker/persönliche Assistenz, Notrufstelle, Alarmanlage, Fahrzeug und/oder andere eine installierte App, eine Webanwendung, eine integrierte Anwendung mit einem zugeordneten Menü und/oder einen Schalter, und/oder Sprach-/Geräusch- /Gestenerkennung und/oder Sensordaten zur Auslösung eines Notrufs sowie vorzugsweise ein Kommunikationsmodul und/oder ein Navigationsmodul verwendet,
b) die App bzw. Anwendung und/oder das Serversystem (11) Datensätze geographischer Bereiche, vorzugsweise in Form von Polygonen der Zuständigkeitsbereiche und Datensätze mit den Adressen sowie den Zuständigkeitsbereichen der Leitstellen (10) von Polizei, Feuerwehr, Rettungsdienst und/oder anderen nutzt,
c) eine App bzw. Anwendung und/oder das Serversystem (11) anhand der aktuellen geografischen Position und optional Art des Notfalls die Zuordnung des optimalen Notrufverfahrens und -ziels, wie zum Beispiel nationales Notrufverfahren, NG112 Inland/Ausland und/oder andere, ermittelt und den Notruf an die zuständige Leitstelle (10) auslöst.
